# EUROPEAN PATENT APPLICATION

(11) **EP 4 394 995 A1**
(43) Date of publication of application: **03.07.2024**
(21) Application number: 21967693.9
(22) Date of filing: 16.12.2021
(51) Int. Cl.: H01M 10/0587

(54) **BATTERY AND ELECTRONIC DEVICE**

(71) Applicant: Dongguan Amperex Technology Limited, Dongguan City, Guangdong Province 523000 (CN)
(72) Inventor: DONG, Yuyang, Dongguan, Guangdong 523000 (CN); YAN, Dongyang, Dongguan, Guangdong 523000 (CN); ZENG, Qiao, Dongguan, Guangdong 523000 (CN)
(74) Representative: Icosa
(86) International application number: PCT/CN2021/138882
(87) International publication number: WO 2023/108558

(57) **Abstract**

This application relates to the field of battery technology, and discloses a battery (1) and an electronic device (2). The battery (1) includes a housing (100), an electrode assembly (200), a first layer (400), and a second layer (500). The electrode assembly includes a first electrode plate, a second electrode plate, and a separator. The electrode assembly is wound, so that the first electrode plate includes a first edge and a second edge disposed opposite to each other along a winding direction and includes a first ending end away from the first edge. Viewed along a first direction, the electrode assembly includes a first surface. The second edge divides the first surface into a first region and a second region. The first region is a region containing the first ending end. The first layer is fixed to the first region and the second region. The second layer is fixed to the first surface and at a distance from the first layer, and the second layer is configured to bond and fix the electrode assembly to the housing. The battery can reduce the risk that the electrode assembly slips relative to the housing when the battery or an electronic device containing the battery is dropped.

## Description

### TECHNICAL FIELD

This application relates to the field of electronic technology, and in particular, to a battery and an electronic device.

### BACKGROUND

A battery is a device that converts external energy into electrical energy and stores the energy internally so that the electrical energy can be supplied to an external device (such as a portable electronic device) when necessary. Currently, batteries are widely used in electronic devices such as a mobile phone, a tablet computer, a laptop computer, an unmanned aerial vehicle, or an electric vehicle.

Generally, a battery includes a housing, an electrode assembly, a current collecting plate, and an electrolyte solution. The electrode assembly is accommodated in the housing. One end of the current collecting plate is fixed to the electrode assembly, and another end of the current collecting plate protrudes out of the housing to form an external terminal of the battery. The electrolyte solution fills in the housing.

Because the electronic device may accidentally drop or collide during use, the electrode assembly is prone to slip relative to the housing. Consequently, a junction between the current collecting plate and the electrode assembly is prone to be impacted, thereby damaging the current collecting plate and the electrode assembly, and reducing the lifespan of the battery.

### SUMMARY

An objective of this application is to provide a battery and an electronic device to reduce the risk that an electrode assembly slips relative to a housing when the battery or the electronic device containing the battery drops or collides, and increase the lifespan.

According to a first aspect, in order to solve the technical problems, this application discloses the following technical solution:
A battery is disclosed, including a housing, an electrode assembly, a first layer, and a second layer. The electrode assembly is accommodated in the housing. The electrode assembly includes a first electrode plate and a second electrode plate that are stacked together and a separator located between the first electrode plate and the second electrode plate. The electrode assembly is wound. The first electrode plate includes a first edge and a second edge disposed opposite to each other along a winding direction and includes a first ending end away from the first edge. Viewed along a first direction, the electrode assembly includes a first surface, the first ending end is located on the first surface, the first ending end is a part of the first electrode plate, and the part is formed by extending the first electrode plate for a preset distance from the second edge along the winding direction of the electrode assembly. The second edge is located on the first surface and divides the first surface into a first region and a second region. The first region is a region containing the first ending end, and the first direction is perpendicular to a surface of the first layer. The first layer is fixed to the first region and the second region. The second layer is fixed to the first surface and at a distance from the first layer, and the second layer is configured to fix the electrode assembly to the housing.

The electrode assembly according to this embodiment of this application includes a second layer. The second layer fixes the electrode assembly to the housing. Before the second layer fails, the electrode assembly in the battery keeps fixed to the housing. Therefore, the battery according to this embodiment of this application can reduce the risk that the electrode assembly slips relative to the housing when the battery or the electronic device containing the battery drops or collides, and increase the lifespan.

As a further improvement of the above technical solution, the second layer is fixed within the second region.

In some embodiments, viewed along the first direction, the first region includes a first edge line opposite to the second edge, and the first edge line is at a first distance from the second edge. The second region includes a second edge line opposite to the second edge, and the second edge line is at a second distance from the second edge. The first distance is less than the second distance.

In some embodiments, the second layer is fixed within the first region.

In some embodiments, viewed along the first direction, the first region includes a first edge line opposite to the second edge, and the first edge line is at a first distance from the second edge. The second region includes a second edge line opposite to the second edge, and the second edge line is at a second distance from the second edge. The first distance is greater than the second distance.

In some embodiments, the second layer is fixed within the first region and the second region.

In some embodiments, along a second direction, a length of the first layer is greater than a length of the second layer. The second direction is a direction in which the second edge extends.

In some embodiments, along a second direction, at least one end of the first layer is located beyond two ends of the second layer. The second direction is a direction in which the second edge extends.

In some embodiments, along a third direction, a width of the first layer is greater than a width of the second layer. The third direction is perpendicular to both the first direction and the second direction.

In some embodiments, the first layer is rectangular, and a long edge of the first layer is at an angle θ to the second edge, satisfying: 0° < θ < 15°.

In some embodiments, an outer side surface of the electrode assembly includes a first face and a second face disposed opposite to each other along the first direction, and includes a third face and a fourth face disposed opposite to each other along a third direction. Viewed along a second direction, both the first face and the second face extend along the third direction and are located between a first reference line and a second reference line. The third face extends in a curved manner and is located on a side of the second reference line, the side being facing away from the first reference line. The fourth face extends in a curved manner and is located on a side of the first reference line (Z1), the side being facing away from the second reference line (Z2). The first face, the third face, the second face, and the fourth face are connected in sequence. Viewed along the first direction, the first surface includes the first face, a part of the third face, and a part of the fourth face, and the second edge is located on the first face. The first layer and/or the second layer are disposed on the first face. The second direction is a direction in which the second edge extends. The third direction is perpendicular to both the first direction and the second direction. By starting from the first edge, an outermost point along the third direction at a first corner in the first electrode plate is a point M, the first reference line is parallel to the first direction and passes through the point M. By starting from the first edge, an outermost point along the third direction at a second corner in the first electrode plate is a point N, and the second reference line is parallel to the first direction and passes through the point N.

In some embodiments, the battery further includes a third layer. A first end of the third layer is fixed to the first face, and a second end of the third layer is fixed to the second face.

In some embodiments, the first end of at least one third layer is fixed to the first layer; and/or, the first end of at least one third layer is fixed to the second layer; and/or, the first end of at least one third layer is fixed to both the first layer and the second layer.

In some embodiments, the first electrode plate is wound to form a plurality of first portions and a plurality of second portions. The second electrode plate includes a third edge and a fourth edge disposed opposite to each other along the winding direction. The second electrode plate is wound around the third edge. The second electrode plate includes a second ending end facing away from the third edge. The second ending end is a part of the second electrode plate, and the part is formed by extending the second electrode plate for a preset distance from the fourth edge along the winding direction. The second ending end is disposed between two adjacent first portions or between two adjacent second portions. Along the winding direction, the first electrode plate exceeds the second ending end. No active material layer is applied on a side of a part of the first electrode plate, the side being facing away from the first edge; the part is located from a start point to the second edge, the start point is a point at which a first portion or second portion just exceeds the second ending end, and the first portion or second portion is adjacent to the second ending end and located on a side of the second ending end, the side being close to the first edge.

In some embodiments, the first layer and/or the second layer includes an adhesive. A first layer and a second layer of the adhesive include a double-sided tape. The double-sided tape includes a substrate layer and a binder layer applied on two sides of the substrate layer, or, the adhesive includes a hot-melt adhesive.

According to a second aspect, in order to solve the technical problems, this application further discloses the following technical solution:

An electronic device is disclosed, including the battery described above.

### BRIEF DESCRIPTION OF DRAWINGS

To describe the technical solutions in some embodiments of this application more clearly, the following outlines the drawings to be used in the description of the embodiments. Evidently, the drawings outlined below merely illustrate some embodiments of this application, and a person of ordinary skill in the art may obtain other drawings according to the structure shown in the drawings.
FIG. 1 is a three-dimensional schematic diagram of a battery as viewed from one direction according to a first embodiment of this application;
FIG. 2 is a three-dimensional schematic diagram of the battery shown in FIG. 1 with a housing hidden;
FIG. 3 is a schematic diagram of the battery shown in FIG. 1 with a housing hidden as viewed along a first direction;
FIG. 4 is a schematic diagram of the battery shown in FIG. 1 with a housing hidden as viewed along a direction opposite to a first direction;
FIG. 5 is a bottom view of the battery shown in FIG. 3;
FIG. 6 is a top view of the battery shown in FIG. 3;
FIG. 7 is a schematic expanded view of the electrode assembly shown in FIG. 2;
FIG. 8 is a schematic diagram of a battery with a housing hidden according to another embodiment of this application;
FIG. 9 is a schematic diagram of a battery with a housing hidden as viewed along a first direction according to a second embodiment of this application;
FIG. 10 is a schematic diagram of the battery shown in FIG. 9 as viewed along a direction opposite to a first direction;
FIG. 11 is a side view of the battery shown in FIG. 9;
FIG. 12 is a schematic diagram of a battery with a housing hidden as viewed along a first direction according to a third embodiment of this application;
FIG. 13 is a schematic diagram of the battery shown in FIG. 12 as viewed along a direction opposite to a first direction;
FIG. 14 is a schematic diagram of a battery with a housing hidden as viewed along a first direction according to a fourth embodiment of this application;
FIG. 15 is a schematic diagram of a battery with a housing hidden as viewed along a first direction according to a fifth embodiment of this application;
FIG. 16 is a schematic diagram of a battery with a housing hidden as viewed along a first direction according to a sixth embodiment of this application;
FIG. 17 is a bottom view of FIG. 16;
FIG. 18 is a schematic diagram of a battery with a housing hidden as viewed along a first direction according to a seventh embodiment of this application;
FIG. 19 is a bottom view of FIG. 18;
FIG. 20 is a schematic diagram of a battery with a housing hidden as viewed along a first direction according to an eighth embodiment of this application;
FIG. 21 is a schematic diagram of the battery shown in FIG. 20 as viewed along a direction opposite to a first direction;
FIG. 22 is a schematic diagram of a battery with a housing hidden as viewed along a first direction Z according to a ninth embodiment of this application;
FIG. 23 is a schematic diagram of a battery with a housing hidden as viewed along a first direction according to a tenth embodiment of this application;
FIG. 24 is a schematic diagram of a battery with a housing hidden as viewed along a first direction according to an eleventh embodiment of this application;
FIG. 25 is a schematic diagram of a battery with a housing hidden as viewed along a first direction according to a twelfth embodiment of this application;
FIG. 26 is a schematic diagram of a battery with a housing hidden as viewed along a first direction according to Comparative Embodiment 1 of this application;
FIG. 27 is a bottom view of FIG. 26;
FIG. 28 is a schematic diagram of a battery with a housing hidden as viewed along a first direction according to Comparative Embodiment 2 of this application;
FIG. 29 is a bottom view of FIG. 24; and
FIG. 30 is a schematic diagram of an electronic device according to an embodiment of this application.

### DETAILED DESCRIPTION

For ease of understanding this application, the following describes this application in more detail with reference to drawings and specific embodiments. It is hereby noted that an element referred to herein as being "fixed to" or "fastened to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

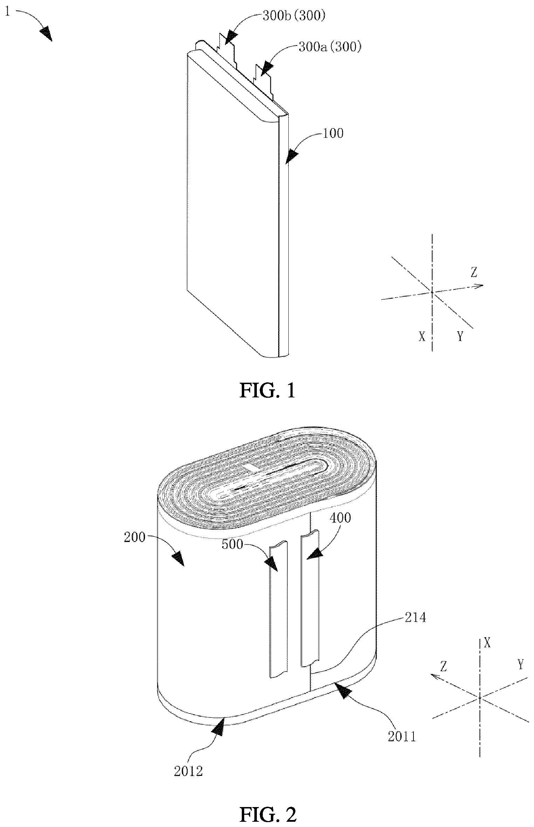

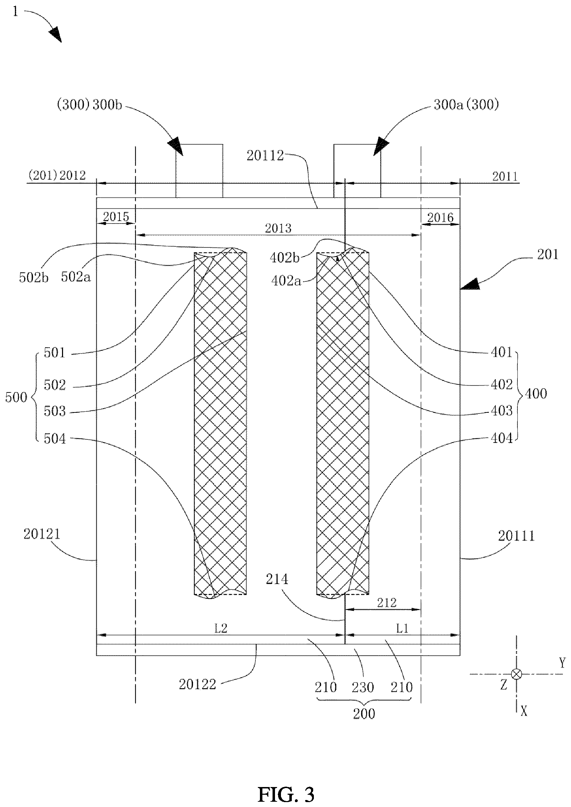

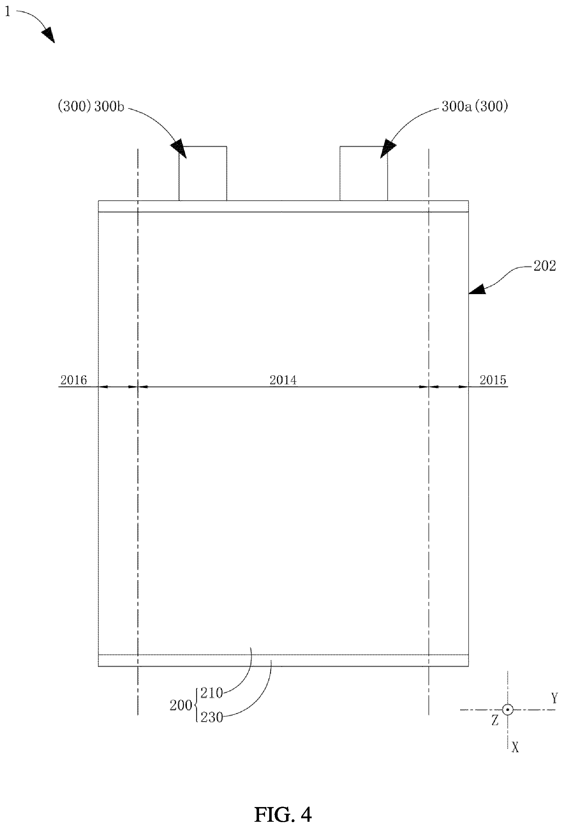

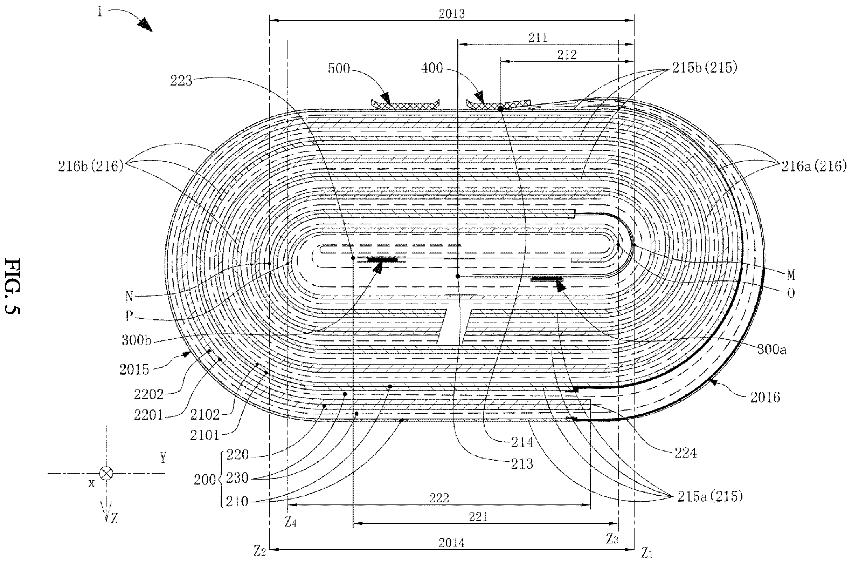

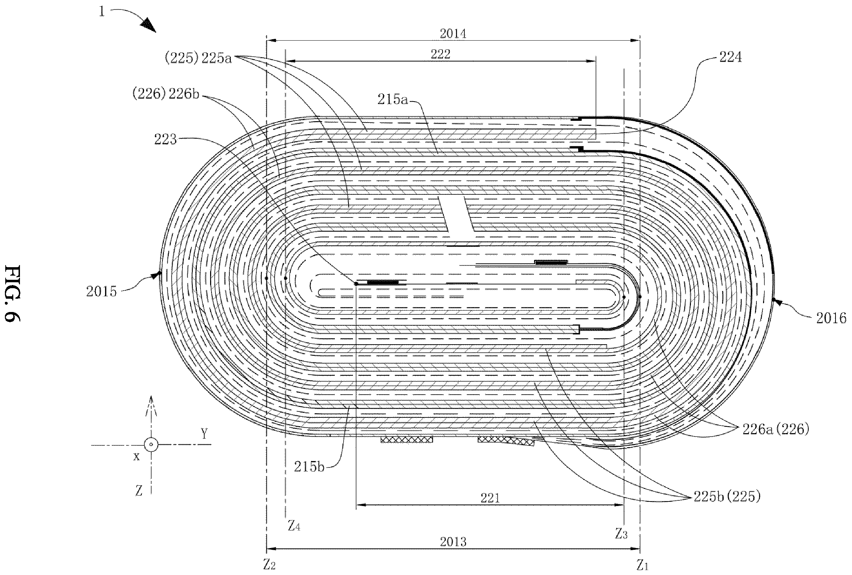

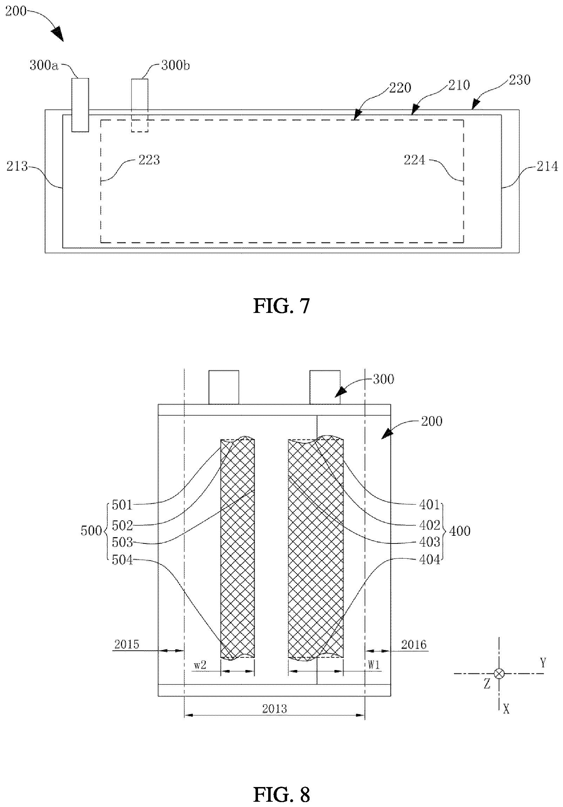

Referring to FIG. 1 to FIG. 2, which are a three-dimensional diagram of a battery 1 according to a first embodiment of this application and a three-dimensional schematic diagram of the battery 1 with a housing hidden, respectively. The battery includes a housing 100, an electrode assembly 200, a current collecting plate 300, a first layer 400, and a second layer 500. The housing 100 constitutes a mounting base in which various components are directly or indirectly mounted. The electrode assembly 200 is accommodated in the housing 100. Referring to FIG. 3 to FIG. 7, FIG. 3 is a schematic diagram of a battery 1 with a housing 100 hidden as viewed along a first direction Z; FIG. 4 is a schematic diagram of the battery 1 as viewed along a direction opposite to a first direction Z; FIG. 5 is a bottom view of the battery shown in FIG. 3; FIG. 6 is a top view of the battery shown in FIG. 3; and FIG. 7 is a schematic expanded view of the electrode assembly 200. The electrode assembly 200 includes a first electrode plate 210, a second electrode plate 220, and a separator 230 that are stacked together. A separator 230 is disposed between the first electrode plate 210 and the second electrode plate 220. The electrode assembly 200 is wound. In this way, the first electrode plate 210 includes a first edge 213 and a second edge 214 disposed opposite to each other along a winding direction, and includes a first ending end 212 away from the first edge 213 along the winding direction of the electrode assembly 200. The first edge 213 is located at the center of the electrode assembly 200. The second edge 214 is disposed away from the first edge 213, and is located on the outer surface of the electrode assembly 200. The first ending end 212 is located on the outer surface of the electrode assembly 200, and is a part of the first electrode plate 210, the part being formed by extending the first electrode plate for a preset distance from the second edge 214. Viewed along the first direction Z in the drawing, the electrode assembly 200 includes a first surface 201. The second edge 214 is located in the first surface 201, and divides the first surface 201 into a first region 2011 and a second region 2012. The first ending end 212 is located in the first surface 201. The first region 2011 is a region containing the first ending end 212. One end of the current collecting plate 300 is electrically connected to the electrode assembly 200, and the other end of the current collecting plate extends out of the housing 100. The first layer 400 is fixed to the first region 2011 and the second region 2012. The second layer 500 is fixed to the first surface 201 and at a distance from the first layer 400. The second layer 500 is configured to fix the electrode assembly 200 to the housing 100. The first direction is a direction perpendicular to the surface of the first layer 400. For ease of description and understanding, this application defines the extension direction of the second edge 214 as a second direction X. In this embodiment, the second direction X is perpendicular to the first direction Z because the second direction X is parallel to a winding axis of the electrode assembly 200 and the first direction Z is perpendicular to the axis. In addition, a direction perpendicular to both the first direction Z and the second direction X is defined as a third direction Y The following describes the specific structures of the housing 100, the electrode assembly 200, the current collecting plate 300, the first layer 400, and the second layer 500 separately.

With respect to the housing 100, referring to FIG. 1, the housing 100 assumes a relatively flat box structure, and forms an accommodation cavity configured to accommodate the electrode assembly 200, a part of the current collecting plate 300, the first layer 400, and the second layer 500. In this embodiment, the battery 1 may be a pouch-type battery. Correspondingly, the housing 100 is made of a flexible sheet such as an aluminum laminated film. Alternatively, in other embodiments of this application, the battery 1 may be a hard-shell battery such as a steel-shell battery or an aluminum-shell battery. In addition, in other embodiments of this application, the housing 100 may be in other shapes such as a block shape or a column shape, without being limited herein.

For the electrode assembly 200, referring to FIG. 5 and FIG. 6 in conjunction with other drawings, the electrode assembly 200 includes a first electrode plate 210, a second electrode plate 220, and a separator 230 that are stacked together. The first electrode plate 210 and the second electrode plate 220 are of opposite polarities, of which one is a positive electrode plate and the other is a negative electrode plate. A separator 230 is disposed between the first electrode plate 210 and the second electrode plate 220, thereby reducing the risk of a short circuit between the first electrode plate 210 and the second electrode plate 220. In this embodiment, the first electrode plate 210 is a positive electrode plate, and the second electrode plate 220 is a negative electrode plate. Specifically, the first electrode plate 210 includes a first current collector 2101 and a first active material layer 2102 applied on the surface of the first current collector 2101. The first current collector 2101 is a carrier of the first active material layer 2102 and a carrier of conducted current. The first active material layer 2102 is a carrier of lithium ions intercalated or deintercalated. In this embodiment, the first current collector 2101 is made of aluminum or aluminum alloy. The first active material layer 2102 includes lithium iron phosphate particles and low Curie temperature ferromagnetic particles, a dispersant, a binder, a conductive agent, and a positive electrode solvent. The foregoing materials are mixed and stirred well and applied onto the surface of the first current collector 2101 to obtain a first active material layer 2102. The second electrode plate 220 includes a second current collector 2201 and a second active material layer 2202 applied on the second current collector 2201. The second current collector 2201 is a carrier of the second active material layer 2202 and a carrier of conducted current. The second active material layer 2202 is a carrier of lithium ions intercalated or deintercalated. In this embodiment, the second current collector 2201 is made of copper or copper alloy. The second active material layer 2202 includes graphite, a conductive agent, a binder, and deionized water. The foregoing materials are mixed and stirred well and applied onto the surface of the second current collector 2201 to obtain a second active material layer 2202. Alternatively, in some other embodiments of this application, the first electrode plate 210 may be a negative electrode plate. Correspondingly, the second electrode plate 220 is a positive electrode plate, and the corresponding material configuration is just the opposite. The stacked first electrode plate 210, second electrode plate 220, and separator 230 are wound together to form a columnar structure with an elongated-oval-shaped cross-section perpendicular to the second direction X.

It is worth noting that the separator 230 in this application serves a main function of isolating the first electrode plate 210 from the second electrode plate 220 and conducting ions. The material of the separator is not limited herein. In some embodiments, the separator 230 includes a porous substrate. In some embodiments, the separator 230 further includes a functional coating applied onto the porous substrate. The functional coating may include at least one of a binder or inorganic particles. In some embodiments, the porous substrate is a polymer film, a multilayer polymer film, or a non-woven fabric, which, in each case, is formed by any one of the following polymers or by a composite of at least two of the following polymers: polyethylene, polypropylene, polyethylene terephthalate, polybutylene terephthalate, polyphthalamide, polyester, polyacetal, polyamide, polycarbonate, polyimide, polyether ether ketone, polyaryl ether ketone, polyetherimide, polyamideimide, polybenzimidazole, polyethersulfone, polyphenylene ether, cycloolefin copolymer, polyphenylene sulfide, and polyethylene naphthalene. Such polymers assume relatively high thermal stability, facilitate surface treatment, and in turn, are easy to be coated. In addition, such polymers are highly flexible and bendable. In some embodiments, the binder includes at least one of the following polymers: poly(vinylidene fluoride-co-hexafluoropropylene), poly(vinylidene fluoride-co-trichloroethylene), polyacrylate, polyacrylic acid, polyacrylic acid sodium salt, polyacrylonitrile, polyvinylpyrrolidone, polyvinyl acetate, poly(ethylene-co-vinyl acetate), polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, poly(acrylonitrile-co-styrene butadiene), polyvinyl alcohol, polyvinyl ether, polytetrafluoroethylene, polyhexafluoropropylene, poly(styrene-co-butadiene), and polyvinylidene difluoride. Such polymers exert a strong bonding effect to bond inorganic particles together, or bond the separator 230 and the first electrode plate 210/the second electrode plate 220 together to form one piece, thereby increasing the hardness of the electrode assembly 200. In other embodiments, the binder may further include other polymers. In some embodiments, the inorganic particles include at least one of the following inorganic particles: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate. Such inorganic particles are of high thermal stability, and can improve the high-temperature resistance of the battery 1.

The electrode assembly 200 is wound so that both the first electrode plate 210 and the second electrode plate 220 are bent several times and stacked in layers in the first direction Z. The first electrode plate 210 includes a first edge 213 and a second edge 214 disposed opposite to each other along the winding direction. The first edge 213 is located at a winding center of the electrode assembly 200. The second edge 214 is located at an end of the first electrode plate 210, the end being away from the first edge 213. The second edge is located on the outer surface of the electrode assembly 200. Viewed along the second direction X shown in FIG. 5 and counted by starting from the first edge 211 along the winding direction of the electrode assembly 200, an outermost point along the third direction Y at a first corner in the first electrode plate 210 is a first point M. A straight line parallel to the first direction Z is created with reference to the first point M, and is defined as a first reference line Z1. Viewed along the second direction X and counted by starting from the first edge 211 along the winding direction of the electrode assembly 200, an outermost point along the third direction Y at a second corner in the first electrode plate 210 is a second point N. A straight line parallel to the first direction Z is created with reference to the second point N, and is defined as a second reference line Z2. Therefore, the first electrode plate 210 includes a first starting end 211 and a first ending end 212 disposed opposite to each other along the winding direction. The first starting end 211 is a part of the first electrode plate 210, the part being formed by extending the first electrode plate from the first edge 213 along the winding direction until the electrode plate initially intersects the first reference line Z1. The first ending end 212 is an ending part of the first electrode plate 210. The first ending end 212 is specifically a part located on the first surface 201 in the first electrode plate 210, the part being formed by extending the first electrode plate for a preset distance from the second edge 214 along the winding direction when viewed along the first direction Z. In this embodiment, the first ending end 212 is a part of the first electrode plate 210, the part being formed by extending the first electrode plate along the winding direction from the second edge 214 to the first reference line Z1 or the second reference line Z2, whichever is closer to the second edge 214. Specifically, along the winding direction, the second edge 214 is close to the first reference line Z1, the preset distance is a distance of extension from the second edge 214 to the first reference line Z1, and the first ending end 212 is a part of the first electrode plate 210, the part being formed by extending the first electrode plate from the second edge 212 until the electrode plate initially intersects the first reference line Z1. Alternatively, in some other embodiments, the first ending end 212 is adaptively adjusted to be slightly longer or slightly shorter on the above basis.

The first electrode plate 210 is wound to form a plurality of first portions 215 located between the first reference line Z1 and the second reference line Z2, and a plurality of second portions 216 located beyond the first reference line Z1 and the second reference line Z2. Viewed along the second direction X, the first portions 215 extend along the third direction Y, and all the first portions 215 are disposed sequentially along the first direction Z. The plurality of first portions 215 are classed into a first portion 215a and a first portion 215b. A direction from an end of the first portion 215a close to the first reference line Z1 to an end close to the second reference line Z2 is opposite to the direction of extending the first electrode plate 210 from the first edge 213 to the second edge 214. A direction from an end of the first portion 215b close to the first reference line Z1 to an end close to the second reference line Z2 is identical to the direction of extending the first electrode plate 210 from the first edge 213 to the second edge 214. As shown in FIG. 5, each first portion 215a is located below each first portion 215b. Specifically, along the first direction Z, each first portion 215a is closer to the second face 2014 than each first portion 215b, and each first portion 215b is closer to the first face 2013 than each first portion 215a. The first face 2013 and the second face 2014 will be described later. Along the winding direction of the first electrode plate 210, the second portion 216 is located between two adjacent first portions 215 to connect the two adjacent first portions 215. The plurality of second portions 216 are classed into a second portion 216a and a second portion 216b. Located on a side of the first reference line Z1, the side being facing away from the first portion 215, the second portion 216a connects a first portion 215a and a first portion 215b. All the second portions 216a are disposed sequentially from inside to outside. Accordingly, located on a side of the second reference line Z2, the side being facing away from the first portion 215, the second portion 216b connects a first portion 215b and a first portion 215a. All the second portions 216b are disposed sequentially from inside to outside.

The second electrode plate 220 includes a third edge 223 and a fourth edge 224 disposed opposite to each other along the winding direction. The second electrode plate 220 is wound around the third edge 223, and therefore, the fourth edge 224 is located at an end of the second electrode plate 220, the end being away from the third edge 223. Viewed along the second direction X and counted by starting from the third edge 223 along the winding direction of the electrode assembly 200, an outermost point along the third direction Y at a first corner in the second electrode plate 220 is a third point O. A straight line parallel to the first direction Z is created with reference to the third point O, and is defined as a third reference line Z3. Along the winding direction of the electrode assembly 200, counted by starting from the third edge 223, an outermost point along the third direction Y at a second corner in the second electrode plate 220 is a fourth point P. A straight line parallel to the first direction Z is created with reference to the fourth point P, and is defined as a fourth reference line Z4. Therefore, the second electrode plate 220 includes a second starting end 221 and a second ending end 222 disposed opposite to each other along the winding direction. The second starting end 221 is a part of the second electrode plate 220, the part being formed by extending the second electrode plate from the third edge 223 along the winding direction until the electrode plate initially intersects the third reference line Z3. The second ending end 222 is an ending part of the second electrode plate 220. The second ending end 222 is specifically a part of the second electrode plate 220, the part being formed by extending the second electrode plate for a preset distance from the fourth edge 224 along the winding direction when viewed along the second direction X (or the first direction Z). In this embodiment, the second ending end 222 is a part of the second electrode plate 220, the part being formed by extending the second electrode plate along the winding direction of the second electrode plate 220 from the fourth edge 224 to the third reference line Z3 or the fourth reference line Z4, whichever is closer to the fourth edge 224. Specifically, along the winding direction, the fourth edge 224 is close to the fourth reference line Z4, and the preset distance is a distance of extending the electrode plate from the fourth edge 224 until the electrode plate initially intersects the fourth reference line Z4. The second ending end 222 is a part of the second electrode plate 220, the part being formed by extending the electrode plate from the fourth edge 224 until the electrode plate initially intersects the fourth reference line Z4. Alternatively, in some other embodiments, the second ending end 222 is adaptively adjusted to be slightly longer or slightly shorter on the above basis.

The second electrode plate 220 is wound to form a plurality of third portions 225 located between the third reference line Z3 and the fourth reference line Z4, and a plurality of fourth portions 226 located beyond the third reference line Z3 and the fourth reference line Z4. The third portions 225 extend flat and straight approximately. All the third portions 225 are disposed sequentially along the first direction Z. The plurality of third portions 225 are classed into a third portion 225a and a third portion 225b. A direction from an end of the third portion 225a close to the third reference line Z3 to an end close to the fourth reference line Z4 is opposite to the direction of extending the second electrode plate 220 from the third edge 223 to the fourth edge 224. A direction from an end of the third portion 225b close to the third reference line Z3 to an end close to the fourth reference line Z4 is identical to the direction from the third edge 223 to the fourth edge 224 of the second electrode plate 220. Along the winding direction of the second electrode plate 220, the fourth portion 226 is located between two adjacent third portions 225 to connect the two adjacent third portions 225. The plurality of fourth portions 226 are classed into a fourth portion 226a and a fourth portion 216b. The fourth portion 226a is located on a side of the third reference line Z3, the side being facing away from the third portion 225. The fourth portion 226b is located on a side of the fourth reference line Z4, the side being facing away from the third portion 225. It is worth noting that the "flat and straight" mentioned herein means that a component substantially extends along a straight line, but possibly at an appropriate flatness deviation rather than being absolutely flat and straight in a geometric sense. For example, in some embodiments, the flatness deviation of the third portion 225 may be less than or equal to 10 µm.

In this embodiment, the second ending end 222 is disposed between two adjacent first portions 215. Along the winding direction, the first electrode plate 210 is disposed beyond the second ending end 222 and an outward end of the separator 230. That is, the battery 1 ends with the first electrode plate 210. In this embodiment, viewed along the second direction X, a part of the first electrode plate 210 is a single-side-coated region, the part is located from a start point to the second edge 214, the start point is a point at which a first portion 215 exceeds the second ending end, and the first portion is adjacent to the second ending end 222 and located on a side of the second ending end 222, the side being close to the first edge 213. Viewed along the second direction X, no first active material layer is applied on a side of the first current collector in the single-side-coated region, the side being facing away from the first edge 213. In other words, viewed along the second direction X, no active material layer is applied on a side of the single-side-coated region, the side being facing away from the first edge 213. No second electrode plate 220 exists on a side of the single-side-coated region, the side being facing away from the winding center on the electrode assembly 200. Therefore, in the part without the second electrode plate, a side of the first current collector 2101, which is away from the first edge 213, does not participate in electrochemical reactions even if the side is coated with an active material. The single-side-coated region saves the material of the electrode assembly 200, and increases the energy density of the battery 1. The active material layer is applied on neither side of a part of the first electrode plate 210, the part is located from a start point to the first ending end 212, the start point is a point at which a first portion 215 just exceeds the second ending end 222, and the first portion is adjacent to the second ending end 222 and located on a side of the second ending end 222, the side being facing away from the first edge 213. Such arrangement also saves the material of the electrode assembly 200, and in turn, increases the energy density of the battery 1. Understandably, in other embodiments, the second ending end 222 may be disposed between two adjacent second portions 215 instead. In this case, a part of the first electrode plate 210 is a single-side-coated region. The part is located from a start point to the second edge 214. The start point is a point at which a second portion 216 exceeds the second ending end 222, and the second portion 216 is adjacent to the second ending end 222 and located on a side of the second ending end 222, the side being oriented toward the first edge 213. Accordingly, no first active material layer is applied to a part of the first electrode plate 210, the part is located from a start point to the second edge 214, the start point is a point at which a second portion 216 just exceeds the second ending end 222, and the second portion 216 is adjacent to the second ending end 222 and located on a side of the second ending end 222, the side being facing away from the first edge 213. It is worth noting that in this embodiment, the electrode assembly 200 ends with the positive plate, and the first layer 400 and the second layer 500 are both disposed on the surface of an aluminum foil. However, in some other embodiments of this application, the electrode assembly 200 may end with the negative electrode plate instead. In this case, the first layer 400 and the second layer 500 are disposed on the surface of a copper foil.

Specifically, referring to FIG. 6 in conjunction with other drawings such as FIG. 3 to FIG. 5, the electrode assembly 200 is wound to form a ring-shaped outer side surface. The outer side surface specifically includes a first face 2013, a second face 2014, a third face 2015, and a fourth face 2016. Viewed along the second direction X, the first face 2013 and the second face 2014 extend along the third direction Y, and are both located between the first reference line Z1 and the second reference line Z2, and are disposed opposite to each other along the first direction Z shown in the drawing. Viewed along the second direction X, the third face 2015 and the fourth face 2016 extend in a curved manner, and are disposed on two sides of the first face 2013 respectively along the winding direction. The third face 2015 is located on a side of the second reference line Z2, the side being away from the first reference line Z1. The fourth face 2016 is located on a side of the first reference line Z1, the side being away from the second reference line Z2. The first face 2013, the third face 2015, the second face 2014, and the fourth face 2016 are sequentially connected to form a ring-shaped outer side surface of the electrode assembly 200.

Referring to FIG. 3 in conjunction with other drawings, when viewed along the first direction Z, the electrode assembly 200 includes a first surface 201. The first surface 201 includes at least a part of the first face 2013, a part of the third face 2015, and a part of the fourth face 2016. Viewed along the first direction Z, the first surface 201 includes a first edge line 20111 and a second edge line 20121 disposed opposite to each other along the third direction Y, and a third edge line 20112 and a fourth edge line 20122 disposed opposite to each other along the second direction X. The second edge 214 is located in the first surface 201, and divides the first surface 201 into a first region 2011 and a second region 2012. The first region 2011 is a region containing the first ending end 212. In this embodiment, the second edge 214 is specifically located in the first face 2013. The first region 2011 is roughly rectangular. Along the third direction Y, the first region 2011 includes a first edge line 20111 opposite to the second edge 214. A first distance L1 exists between the first edge line 20111 and the second edge 214 along the third direction Y The second region 2012 is also roughly rectangular. Along the third direction Y, the second region 2012 includes a second edge line 20121 opposite to the second edge 214. A second distance L2 exists between the second edge line 20121 and the second edge 214 along the third direction Y. In this embodiment, the first distance L1 is less than the second distance L2. The third edge line 20112 is formed by winding one long edge of the first electrode plate 210. The fourth edge line 20122 is formed by winding the other long edge of the first electrode plate 210. The third edge line and the fourth edge line are disposed opposite to each other along the second direction X. The first edge line 20111, the second edge line 20121, the third edge line 20112, and the fourth edge line 20122 together define the first surface 201. Referring to FIG. 4 and FIG. 6 together, when viewed along a direction opposite to the first direction Z, the electrode assembly 200 includes a second surface 202. The second surface 202 includes at least a part of the second face 2014, a part of the third face 2015, and a part of the fourth face 2016.

For the current collecting plate 300, still referring to FIG. 3 in conjunction with other drawings, the current collecting plate 300 assumes a flat structure. One end of the current collecting plate is electrically connected to the electrode assembly 200, and the other end of the current collecting plate protrudes out of the housing 100 to form an electrode terminal of the battery 1. In this embodiment, the battery 1 includes two current collecting plates 300. The two current collecting plates 300 are a first current collecting plate 300a and a second current collecting plate 300b, as shown in the drawing. One end of the first current collecting plate 300a extends into the electrode assembly 200 and is connected to the first electrode plate 210, and the other end of the first current collecting plate protrudes out of the housing 100 along the second direction X. When viewed along the first direction Z, the first current collecting plate 300a overlaps the edge of the first surface 201, that is, the third edge line 20112. The material of the first current collecting plate 300a includes aluminum. For example, the first current collecting plate 300a is made of aluminum. For another example, the first current collecting plate 300a includes a first substrate made of aluminum, and a nickel layer deposited on the surface of the second substrate. Alternatively, in some other embodiments, the first current collecting plate 300a may be made of any other suitable material, such as nickel. One end of the second current collecting plate 300b extends into the electrode assembly 200 and is connected to the second electrode plate 220, and the other end of the second current collecting plate protrudes out of the housing along the second direction X. When viewed along the first direction Z, the second current collecting plate 300b overlaps the third edge line 20112 of the first surface 201. The material of the second current collecting plate 300b includes copper. For example, the second current collecting plate 300b is made of copper. For another example, the second current collecting plate 300b includes a second substrate made of copper, and a nickel layer deposited on the surface of the second substrate. Alternatively, in some other embodiments, the second current collecting plate 300b may be made of any other suitable material, such as nickel. Understandably, in other embodiments of this application, the battery 1 may include other numbers of current collecting plates 300, for example, include more than three or more current collecting plates 300.

For the first layer 400, referring to FIG. 3 in conjunction with other drawings, the first layer 400 is fixed to the first surface 201, and is disposed at the second edge 214 that is a junction between the first region 2011 and the second region 2012. In this way, a part of the first layer is fixed to the first region 2011 and another part of the first layer is fixed to the second region 2012, so as to fix the first ending end 212 of the first electrode plate 210. In this embodiment, the first layer 400 includes an adhesive. The adhesive fixes the first ending end 214 by bonding. The first layer 400 is in the shape of a strip extending along the second direction X shown in the drawing, and crosses the second edge 214 in the third direction Y shown in the drawing, so as to fix the first ending end 212 to an inner circle of the electrode assembly 200, the inner circle being located further inside than the first ending end 212. Specifically, the first layer 400 includes a first lateral edge 401, a second lateral edge 402, a third lateral edge 403, and a fourth lateral edge 404. Both the first lateral edge 401 and the third lateral edge 403 extend along the second direction X. The second lateral edge 402 and the fourth lateral edge 404 are disposed opposite to each other along the second direction X, and are connected to the first lateral edge 401 and the third lateral edge 403 respectively. The first lateral edge 401, the second lateral edge 402, the third lateral edge 403, and the fourth lateral edge 404 are sequentially connected to form a closed shape, such as a rectangle. In some embodiments, a recess recessed toward an opposite lateral edge and a bulge protruding out away from the opposite lateral edge is created on at least one of the first lateral edge 401, the second lateral edge 402, the third lateral edge 403, or the fourth lateral edge 404. For example, referring to FIG. 3, the second lateral edge 402 includes a recess 402a recessed toward the fourth lateral edge 404 and/or a bulge 402b protruding out away from the third lateral edge 403.

In this embodiment, one side of the first layer 400 is fixed to the first surface 201, and the other side of the first layer is fixed to the inner wall of the housing 100. In this way, the first layer 400 can not only fix the first ending end 212, but also serve a function of fixing the electrode assembly 200 to the housing 100. Specifically, the adhesive may be a double-sided tape. The double-sided tape includes a substrate layer, and a binder layer applied on both sides of the substrate layer. The adhesive is fixed to the first surface 201 by the binder layer on one side, and fixed to the inner surface of the housing 100 by the binder layer on the other side. Various materials of the double-sided tape may be selected. The substrate layer may include at least one of polyethylene terephthalate, a cellulose derivative, polyvinyl chloride, polyolefin, polystyrene, polyester, polyimide, polyamide, polycarbonate, or polyphenylene sulfide. The binder layer may include at least one of rubber-based resin, acrylic resin, or silicone-based resin. Adaptive adjustments may be made to this application with respect to the materials, as long as the double-sided tape can fix the first ending end and fix the electrode assembly 200 to the housing 100. Understandably, in other embodiments of this application, the adhesive may be a hot-melt adhesive or another adhesive that possesses adhesive properties on both sides. The types of the adhesive are not listed exhaustively here. When the first layer 400 does not need to serve a function of fixing the electrode assembly 200 to the housing 100, the adhesive may be a binder layer that possesses adhesive properties on just a single side, such as single-sided tape. In addition, in some other embodiments of this application, the first layer 400 may be any other component that can implement fixing of the first ending end 214.

Still referring to FIG. 3 and FIG. 4, the second layer 500 is fixed to the first surface 201 and also the inner wall of the housing 100, so as to fix the electrode assembly 200 to the housing 100. The second layer 500 assumes a strip structure extending along the second direction X shown in the drawing, and is entirely disposed in the second region 2012, so as to fix the second region 2012 to the housing 100. The second layer 500 is in the shape of a strip extending along the second direction X shown in the drawing, and includes a first lateral edge 501, a second lateral edge 502, a third lateral edge 503, and a fourth lateral edge 504. The first lateral edge 501 and the third lateral edge 503 both extend along the second direction X. The second lateral edge 502 and the fourth lateral edge 504 are disposed opposite to each other along the second direction X, and are connected to the first lateral edge 501 and the third lateral edge 503 respectively. The first lateral edge 501, the second lateral edge 502, the third lateral edge 503, and the fourth lateral edge 504 are sequentially connected to form a closed shape, such as a roughly rectangular shape. In some embodiments, a recess recessed toward an opposite lateral edge and/or a bulge protruding out away from the opposite lateral edge is created on at least one of the first lateral edge 501, the second lateral edge 502, the third lateral edge 503, or the fourth lateral edge 504. For example, referring to FIG. 3, the second lateral edge 502 includes a recess 502a recessed toward the fourth lateral edge 504 and/or a bulge 502b protruding out away from the third lateral edge 503. In this embodiment, the second layer 500 includes an adhesive, and fixes the electrode assembly 200 to the housing 100 by bonding. The adhesive may be a double-sided tape. The double-sided tape includes a substrate layer and a binder layer applied on both sides of the substrate layer. The substrate layer may include at least one of polyethylene terephthalate, a cellulose derivative, polyvinyl chloride, polyolefin, polystyrene, polyester, polyimide, polyamide, polycarbonate, or polyphenylene sulfide. The binder layer may include at least one of rubber-based resin, acrylic resin, or silicone-based resin. Adaptive adjustments may be made to this application with respect to the materials as long as the double-sided tape can fix the electrode assembly to the housing. Definitely, in some other embodiments of this application, the second layer 500 may be any other component that can fix the first surface 201 to the inner wall of the housing 100. For example, the second layer 500 may be an adhesive layer that possesses adhesive properties on both sides, such as a hot-melt adhesive. Along the second direction X, the length of the second layer 500 may be approximately identical to the length of the first layer 400, and two ends of the second layer may be roughly aligned with the two ends of the first layer. In this embodiment, a distance exists between the second layer 500 and the first layer 400, and the second layer 500 is located outside the first region 2011. In other words, the first layer is separated from the second layer. In some other embodiments of this application, the first layer 400 may be integrated with the second layer 500. However, under the condition of the same bonding area, the integrated arrangement is prone to leave more residual bubbles inside the structure when the integrated structure is fixed to the first surface 201, thereby reducing the overall fixing effect of the first layer 400 and the second layer 500. Conversely, when the first layer 400 is separated from the second layer 500, the foregoing adverse effect is prevented.

Understandably, in other embodiments of this application, adaptive adjustments may be made on the basis of such arrangement. For example, the second layer 500 may be disposed in the first region 2011 instead. For another example, as shown in FIG. 8, along the third direction Y, the width W1 of the first layer 400 is greater than the width W2 of the second layer 500. The first layer 400 needs to be connected to the first region 2011, the second region 2012, and the inner wall of the housing 100 concurrently, and the second layer 500 needs to be connected to the second region 2012 and the inner wall of the housing 100 concurrently. Therefore, under the condition that the width is the same, the probability of detachment of the first layer 400 from the connected region is higher than the probability of detachment of the second layer 500 from the connected region. The above arrangement is intended to strengthen the fixing effect of the first layer 400. For another example, the two ends of the first layer 400 is not aligned with the two ends of the second layer 500, and at least one end of the first layer 400 is located beyond the two ends of the second layer 500 along the second direction X.

The battery 1 according to this embodiment of this application includes a housing 100, an electrode assembly 200, a first layer 400, and a second layer 500. The electrode assembly 200 includes a first electrode plate 210, a second electrode plate 220, and a separator 230. The electrode assembly 200 is wound, so that the first electrode plate 210 includes a first edge 213 and a second edge 214 disposed opposite to each other along a winding direction and includes a first ending end 212 away from the winding center of the electrode assembly 200. Viewed along the first direction Z in the drawing, the electrode assembly 200 includes a first surface 201. The second edge 214 is located in the first surface 201, and divides the first surface 201 into a first region 2011 and a second region 2012. The first region 2011 is a region containing the first ending end 212. A part of the first layer 400 is fixed to the first region 2011, and another part of the first layer is fixed to the second region 2012. The second layer 500 is fixed to the first surface 201 and at a clearance from the first layer 400. The second layer is configured to fix the electrode assembly 200 to the housing 100.

Compared with the batteries currently available on the market, the battery 1 according to this embodiment of this application further includes a second layer 500. By disposing the second layer 500, the electrode assembly 200 is fixed to the housing 100, thereby reducing the risk of the electrode assembly slipping relative to the housing when the battery 1 or an electronic device containing the battery 1 is dropped.

In addition, the first layer 400 serves not only a function of fixing the first ending end 212 but also a function of fixing the electrode assembly 200 and the housing 100, thereby enhancing the overall fixing effect of the electrode assembly 200.

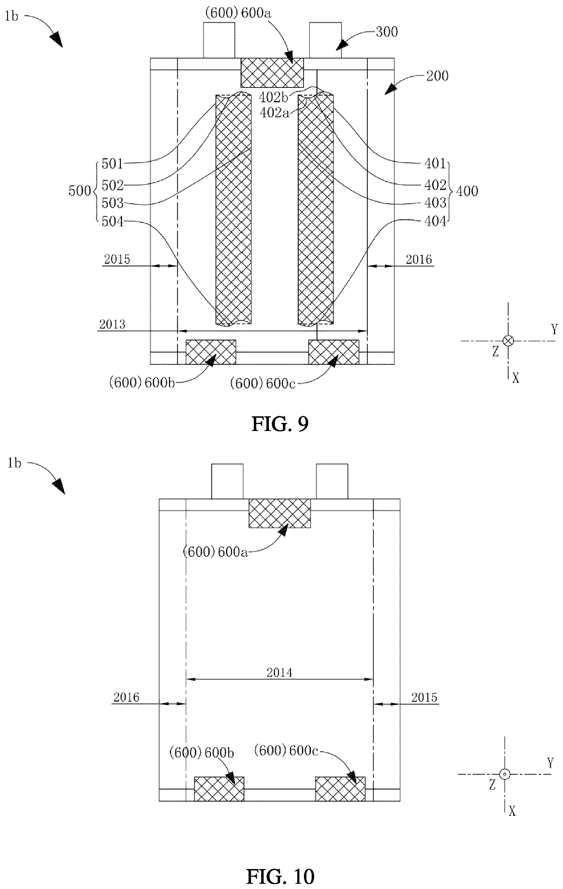

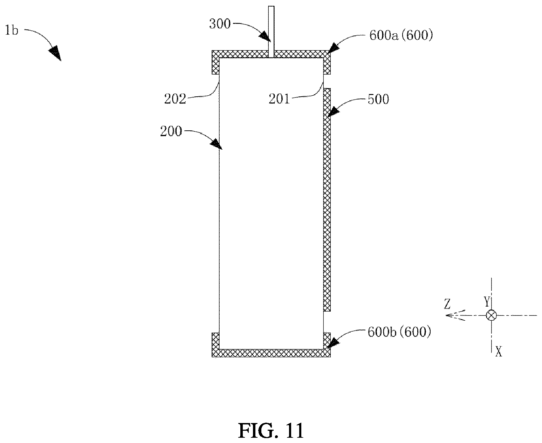

Understandably, the above embodiment is merely an implementation in this application. In fact, this application is not limited to the above embodiment. Adaptive variations may be made to this application on the basis of the above embodiment, as long as the battery includes the second layer 500. For example, FIG. 9 is a schematic diagram of a battery 1b with a housing 100 hidden as viewed along a first direction according to a second embodiment of this application; FIG. 10 is a schematic diagram of the battery 1b with a housing hidden as viewed along a direction opposite to a first direction; and FIG. 11 is a schematic diagram of the battery lb viewed along a third direction. With reference to FIG. 1 to FIG. 8 together, the battery 1b includes a housing, an electrode assembly 200, a current collecting plate 300, a first layer 400, and a second layer 500, and mainly differs from the battery 1 provided in the first embodiment in that: the battery 1b further includes a third layer 600. Specifically, the third layer 600 is disposed in a strip shape. A first end of the third layer is fixed to the first face 2013, and a second end of the third layer is fixed to the second face 2014 after bypassing the end portion of the electrode assembly 200. The third layer 600 is in a tensioned state, so that the electrode assembly 200 can be clamped tightly in the first direction Z. In some embodiments, the third layer 600 includes an adhesive. The adhesive includes a substrate layer and a binder layer. The substrate layer may include at least one of polyethylene terephthalate (PET), a cellulose derivative, polyvinyl chloride, polyolefin, polystyrene, polyester, polyimide, polyamide, polycarbonate, or polyphenylene sulfide. The binder layer is disposed on the surface of the substrate layer, and may include at least one of rubber-based resin, acrylic resin, or silicone-based resin. The binder layer possesses adhesive properties, and the third layer 600 is fixed to the electrode assembly 200 by the binder layer. Definitely, adaptive adjustments may be made to this application with respect to the materials, as long as the third layer 600 is fixed to two opposite faces of the electrode assembly 200, the two faces being opposite to each other along the first direction Z. Definitely, in some other embodiments of this application, the third layer 600 may be any other component that can fix the first surface 201 to the inner wall of the housing 100. For example, the third layer 600 may be an adhesive layer that possesses adhesive properties on both sides, such as a hot-melt adhesive.

In this embodiment, the battery 1b includes three third layers 600: a third layer 600a, a third layer 600b, and a third layer 600c, as shown in the drawing. The third layer 600a is disposed at an end of the electrode assembly 200, the end being close to the current collecting plate 300. The third layer 600b and the third layer 600c are disposed at an end of the electrode assembly 200, the end being away from the current collecting plate 300. In this embodiment, at least one third layer 600 simultaneously covers the first region 2021 and at least a part of the second region 2012, so as to strengthen the fixing effect for the first ending end 212. Optionally, the third layer 600 is single-sided tape. Alternatively, in some other embodiments, the third layer 600 may be a double-sided tape. In this case, the third layer 600 may further serve a function of fixing the electrode assembly 200 and the housing 100. Understandably, in some other embodiments of this application, the number of the third layers 600 may be another value.

Compared with the battery 1 provided in the first embodiment, the battery 1b can reduce the risk that the electrode assembly slips relative to the housing when the battery 1 or the electronic device containing the battery 1 drops, and can strengthen the effect of maintaining the wound state of the electrode assembly 200 and make the electrode assembly not prone to fall apart in a case of dropping.

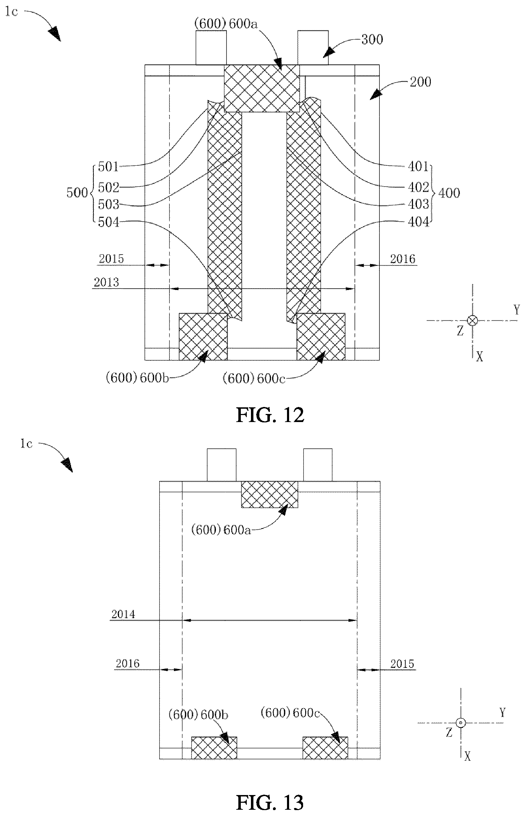

For another example, FIG. 12 and FIG. 13 are schematic diagrams of a battery 1c with a housing hidden as viewed along two directions according to a third embodiment of this application. With reference to FIG. 1 to FIG. 11 together, the battery 1c includes a housing, an electrode assembly 200, a current collecting plate 300, a first layer 400, a second layer 500, and a third layer 600, and mainly differs from the battery 1b provided in the second embodiment in that: in the battery 1c, at least one of the first layer 400 or the second layer 500 is fixed to at least one third layer 600. Next, this application is described by using an example in which the battery 1c includes three third layers 600. Understandably, in other embodiments of this application, the battery 1c may include other numbers of third layers 600. Specifically, the three third layers 600 are: a third layer 600a, a third layer 600b, and a third layer 600c. The third layer 600a is disposed at an end of the electrode assembly 200, the end being close to the current collecting plate 300. A first end of the third layer is adhesively fixed to the first face 2013. At least a part of the first end is fixed to a part of the first layer 400 and a part of the second layer 500. A second end of the third layer is fixed to the second face 2014. Both the third layer 600b and the third layer 600c are disposed at an end of the electrode assembly 200, the end being away from the current collecting plate 300. The first end of the third layer 600b is adhesively fixed to the first face 2013, and at least a part of the first end is fixed to a part of the second layer 500. A second end of the third layer 600b is fixed to the second face 2014. A first end of the third layer 600c is adhesively fixed to the first face 2013, and at least a part of the first end is fixed to a part of the first layer 400. A second end of the third layer 600c is fixed to the second face 2014. Understandably, in some other embodiments of this application, adaptive adjustments may be made on the basis of the above arrangement, as long as the first end of at least one third layer 600 is fixed to at least one of the first layer 400 or the second layer 500.

In the battery 1b provided in the second embodiment, the first end of the third layer is directly fixed to the first face 2013, and the bonding effect of the third layer is ordinary. In contrast, the battery 1c makes the first end of the third layer 600 be adhesively fixed to the first layer 400 (and/or the second layer 500) that serves as an adhesive. The bonding face of the third layer 600 and the bonding face of the first layer 400 (and/or the second layer 500) that are bonded together possess adhesive properties. Therefore, such arrangement can strengthen the effect of fixing the third layer 600 itself. Definitely, the third layer 600 covers a part of the first layer 400 (and/or the second layer 500). Therefore, the fixing area between the first layer 400 (and/or the second layer 500) and the housing 100 decreases to some extent. In this case, the disadvantage can be overcome by appropriately increasing the area of the first layer 400 (and/or the second layer 500), or by using a double-sided tape as the third layer 600.

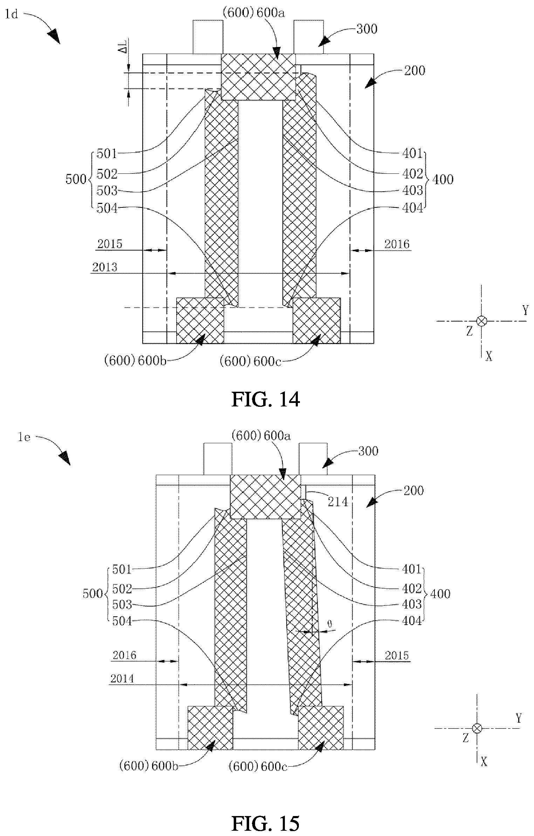

For another example, FIG. 14 is a schematic diagram of a battery 1d with a housing hidden according to a fourth embodiment of this application. With reference to FIG. 1 to FIG. 13 together, the battery 1d still includes a housing, an electrode assembly 200, a current collecting plate 300, a first layer 400, a second layer 500, and a third layer 600, and mainly differs from the battery 1c provided in the third embodiment in that: along the second direction X, the first layer 400 in the battery 1d is greater than the second layer 500 in length, and a length difference between the first layer and the second layer along the second direction X is denoted as ΔL. Because the electrode assembly 200 is formed by winding, a great internal stress exists at the first ending end 212 of the electrode assembly 200, and the second edge 214 is less flat than the remaining part of the electrode assembly 200. With the first layer 400 being longer than the second layer 500, an effect of firmer fixing can be achieved through a larger coverage area on the one hand, and more of the second edge 214 can be covered on the other hand, so as to improve the flatness at the second edge.

For another example, FIG. 15 is a schematic diagram of a battery 1e with a housing hidden according to a fifth embodiment of this application. With reference to FIG. 1 to FIG. 14 together, the battery 1d still includes a housing, an electrode assembly 200, a current collecting plate 300, a first layer 400, a second layer 500, and a third layer 600, and mainly differs from the battery 1c provided in the third embodiment in that: the extension direction of the first layer 400 is at an angle θ to the second direction X instead of being in line with the second direction X. Specifically, the first layer 400 is rectangular, and includes a first lateral edge 401, a second lateral edge 402, a third lateral edge 403, and a fourth lateral edge 404. The first lateral edge 401 and the third lateral edge 403 are long edges of the first layer 400, and an angle θ is formed between the first lateral edge 401 and the second lateral edge 214. With the first layer 400 tilting against the second edge 214, the dimension of the first layer 400 along the second direction X is larger than the length of the first lateral edge 401, thereby increasing the length of coverage of the first layer 400 on the second edge 214, and in turn, improving the flatness of the electrode assembly 200 at the second edge 214. In order to prevent the two end portions of the first layer 400 from being too inclined to cover the second edge 214, the angle θ preferably satisfies: 0° < θ < 15°.

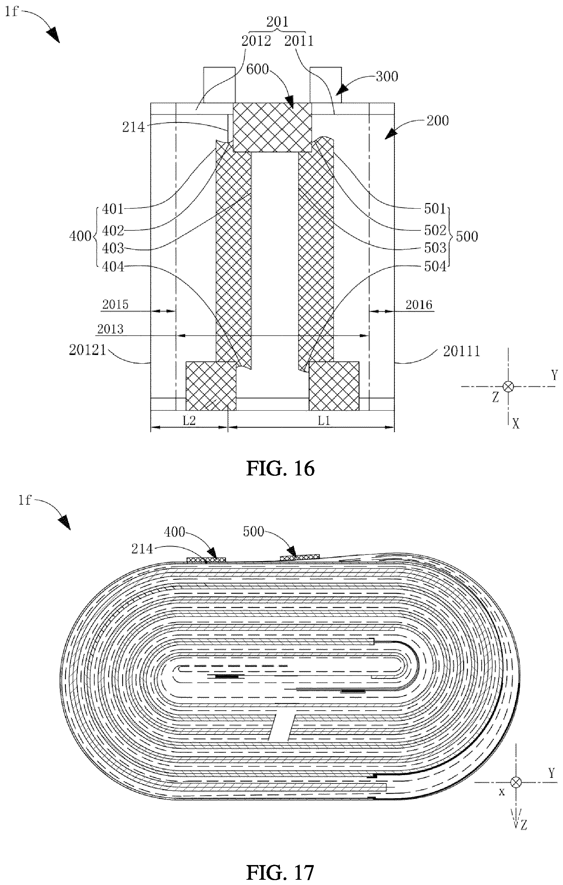

For another example, FIG. 16 is a schematic diagram of a battery 1f with a housing hidden as viewed along the first direction according to a sixth embodiment of this application, and FIG. 17 is a bottom view of FIG. 16. With reference to FIG. 1 to FIG. 15 together, the battery 1f includes a housing, an electrode assembly 200, a current collecting plate 300, a first layer 400, a second layer 500, and a third layer 600, and mainly differs from the battery 1c provided in the third embodiment in that: in the battery 1f, the second layer 500 is fixed within the first region 2011 of the first surface 201, that is, located outside the second region 2011. In this embodiment, the first distance L1 is greater than the second distance L2, which means that the second edge 214 is located in a left position in the first surface 201 shown in FIG 13. The first layer 400 is disposed at a junction between the first region 2011 and the second region 2012. A part of the first layer is fixed to the first region 2011, and another part of the first layer is fixed to the second region 2012. The second layer 500 is fixed to the first region 2011, and is at a clearance from the first layer 400.

When the battery 1c provided in the third embodiment is subjected to a strong impact, the second layer 500 may tear a part of a first current collector below the second layer, thereby potentially causing detachment of an active material of the electrode assembly 200, where the active material is applied on a side of the first current collector located below, the side being oriented toward the first edge 213. In contrast, when the battery 1f provided in this embodiment is subjected to a strong impact, even if the second layer 500 may tear the current collector below the second layer, there is no possibility of causing detachment of the active material because the active material is applied on neither side of the first current collector below the second layer 500, thereby reducing or eliminating the hazard of detachment. Understandably, in some other embodiments of this application, adaptive adjustments may be made on the basis of the above arrangement. For example, the second layer 500 is still disposed in the first region 2011, but the first distance L1 is less than the second distance L2.

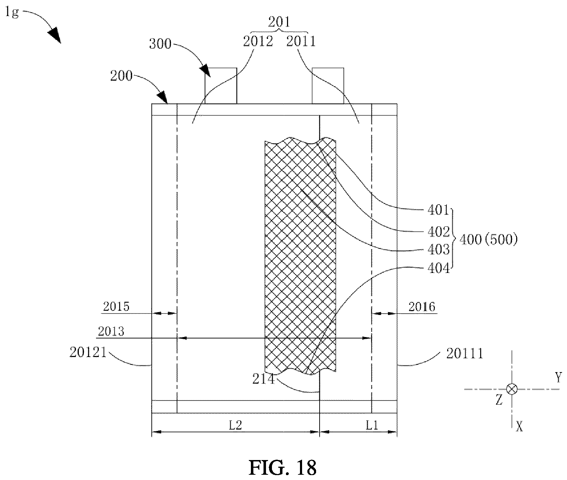

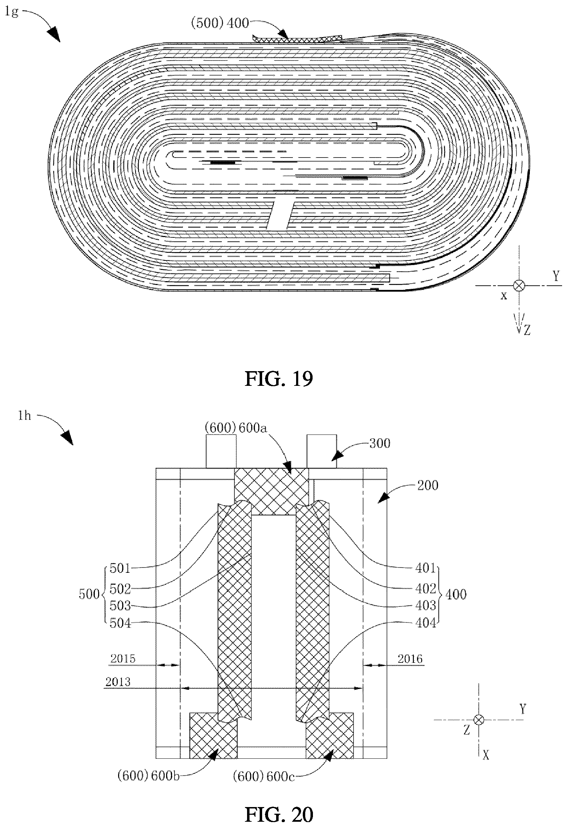

For another example, FIG. 18 is a schematic diagram of a battery 1g with a housing 100 hidden according to a seventh embodiment of this application; and FIG. 19 is a bottom view of FIG. 18. With reference to FIG. 1 to FIG. 16 together, the battery 1g includes a housing, an electrode assembly 200, a current collecting plate 300, a first layer 400, and a second layer 500, and mainly differs from the battery 1 provided in the first embodiment in that: both the first layer 400 and the second layer 500 in the battery 1g play a role of connecting the electrode assembly 200 to the housing, and the first layer is integrated with the second layer. As mentioned earlier above, although the integrated arrangement of the first layer 400 and the second layer 500 can simplify the fixing process of the second layer 500 and shorten a manufacturing cycle time of the battery 1g, the integration gives rise to more residual bubbles, and reduces the strength of fixing between the second layer 500 and the electrode assembly 200.

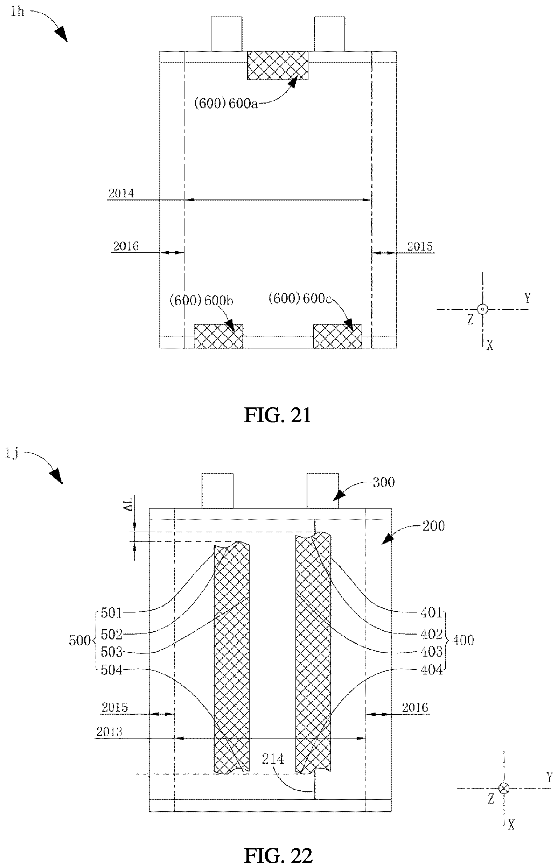

For another example, FIG. 20 is schematic diagram of a battery 1h with a housing hidden as viewed along the first direction according to an eighth embodiment of this application, and FIG. 21 is schematic diagram of the battery 1h viewed along a direction opposite to the first direction Z. With reference to FIG. 1 to FIG. 15 together, the battery 1h includes a housing, an electrode assembly 200, a current collecting plate 300, a first layer 400, a second layer 500, and a third layer 600, and mainly differs from the battery 1c provided in the third embodiment in that: in the battery 1c, one end of the third layer 600 is fixed to at least one of the first layer 400 or the second layer 500; and in this embodiment, the third layer 600 is fixed to the surface of the electrode assembly 200, and a part of at least one of the first layer 400 or the second layer 500 is fixed to the third layer 600. The following describes this embodiment by using an example in which the battery 1h includes three third layers 600. Specifically, the three third layers 600 are: a third layer 600a, a third layer 600b, and a third layer 600c. The third layer 600a is disposed at an end of the electrode assembly 200, the end being close to the current collecting plate 300. A first end of the third layer 600a is adhesively fixed to the first face 2013, and a second end of the third layer is fixed to the second face 2014. An end of the first layer 400 and/or the second layer 500, which is close to the current collecting plate 300, is fixed to the first end of the third layer 600. Both the third layer 600b and the third layer 600c are disposed at an end of the electrode assembly 200, the end being away from the current collecting plate 300. The first end of the third layer 600b is adhesively fixed to the first face 2013. A second end of the third layer 600b is fixed to the second face 2014. An end of the second layer 500, which is away from the current collecting plate 300, is fixed to the first end of the third layer 600b. A first end of the third layer 600c is adhesively fixed to the first face 2013, and a second end of the third layer 600c is fixed to the second face 2014. An end of the first layer 400, which is away from the current collecting plate 300, is fixed to the first end of the third layer 600c. With reference to the third embodiment above, understandably, in some other embodiments of this application, adaptive adjustments may be made on the basis of the above arrangement, as long as the first end of at least one third layer 600 is fixedly connected to at least one of the first layer 400 or the second layer 500.

For another example, FIG. 22 is a schematic diagram of a battery 1j with a housing hidden as viewed along a first direction Z according to a ninth embodiment of this application. The battery 1j includes a housing, an electrode assembly 200, a current collecting plate 300, a first layer 400, and a second layer 500. The main difference between the battery 1j and the battery 1 is that, along the second direction X, the first layer 400 in the battery 1j is greater than the second layer 500 in length, and a length difference between the first layer and the second layer along the second direction X is ΔL shown in the drawing. Because the electrode assembly 200 is formed by winding, a great internal stress exists at the first ending end 212 of the electrode assembly 200, and the second edge 214 is less flat than the remaining part of the electrode assembly 200. With the first layer 400 being longer than the second layer 500, an effect of firmer fixing can be achieved through a larger coverage area on the one hand, and more of the second edge 214 can be covered on the other hand, so as to improve the flatness at the second edge. In addition, the main difference between the battery 1j and the battery 1d is that the battery 1j does not include the third layer 600.

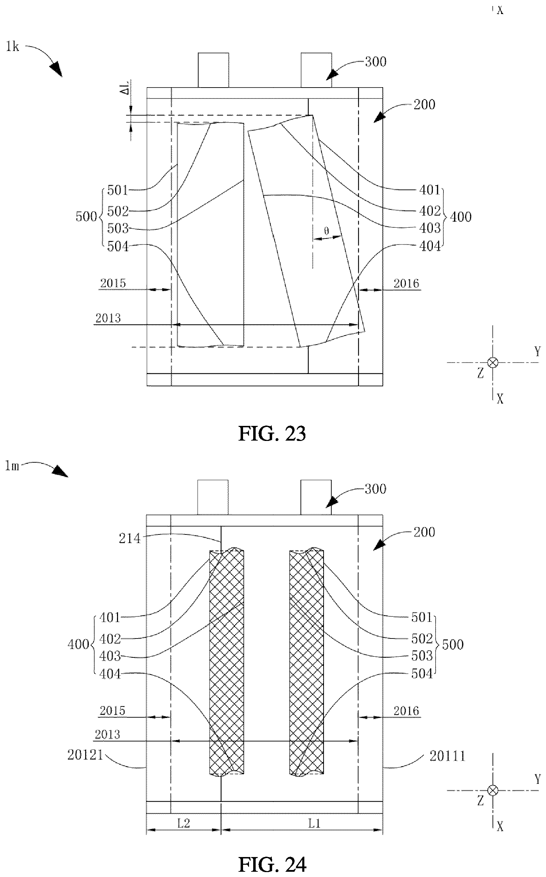

For another example, FIG. 23 is a schematic diagram of a battery 1k with a housing hidden as viewed along a first direction Z according to a tenth embodiment of this application. The battery 1g includes a housing, an electrode assembly 200, a current collecting plate 300, a first layer 400, and a second layer 500. The main difference between the battery 1k and the battery 1 is that the extension direction of the first layer 400 is at an angle θ to the second direction X instead of being in line with the second direction X. Specifically, the first layer 400 is rectangular, and includes a first lateral edge 401, a second lateral edge 402, a third lateral edge 403, and a fourth lateral edge 404. The first lateral edge 401 and the third lateral edge 403 are long edges of the first layer 400, and an angle θ is formed between the first lateral edge 401 and the second lateral edge 214. With the first layer 400 tilting against the second edge 214, the dimension of the first layer 400 along the second direction X is larger than the length of the first lateral edge 401, thereby increasing the length of coverage of the first layer 400 on the second edge 214, and in turn, improving the flatness of the electrode assembly 200 at the second edge 214. In order to prevent the two end portions of the first layer 400 from being too inclined to cover the second edge 214, the angle θ preferably satisfies: 0° < θ < 15°. In addition, the main difference between the battery 1k and the battery 1e is that the battery 1k does not include the third layer 600.

For another example, FIG. 24 is a schematic diagram of a battery 1m with a housing hidden as viewed along a first direction Z according to an eleventh embodiment of this application. The battery 1g includes a housing, an electrode assembly 200, a current collecting plate 300, a first layer 400, and a second layer 500. The main difference between the battery 1m and the battery 1 is that in the battery 1m, the second layer 500 is fixed within the first region 2011 of the first surface 201, that is, located outside the second region 2011. In this embodiment, the first distance L1 is greater than the second distance L2, which means that the second edge 214 is located in a left position in the first surface 201 shown in FIG 13. The first layer 400 is disposed at a junction between the first region 2011 and the second region 2012. A part of the first layer is fixed to the first region 2011, and another part of the first layer is fixed to the second region 2012. The second layer 500 is fixed to the first region 2011, and is at a distance from the first layer 400.

When the battery 1 provided in the first embodiment is subjected to a strong impact, the second layer 500 may tear a part of a first current collector below the second layer, thereby potentially causing detachment of an active material of the electrode assembly 200, where the active material is applied on a side of the first current collector located below, the side being oriented toward the first edge 213. In contrast, when the battery 1m provided in this embodiment is subjected to a strong impact, even if the second layer 500 may tear the current collector below the second layer, there is no possibility of causing detachment of the active material because the active material is applied on neither side of the first current collector below the second layer 500, thereby reducing or eliminating the hazard of detachment. Understandably, in some other embodiments of this application, adaptive adjustments may be made on the basis of the above arrangement. For example, the second layer 500 is still disposed in the first region 2011, but the first distance L1 is less than the second distance L2.

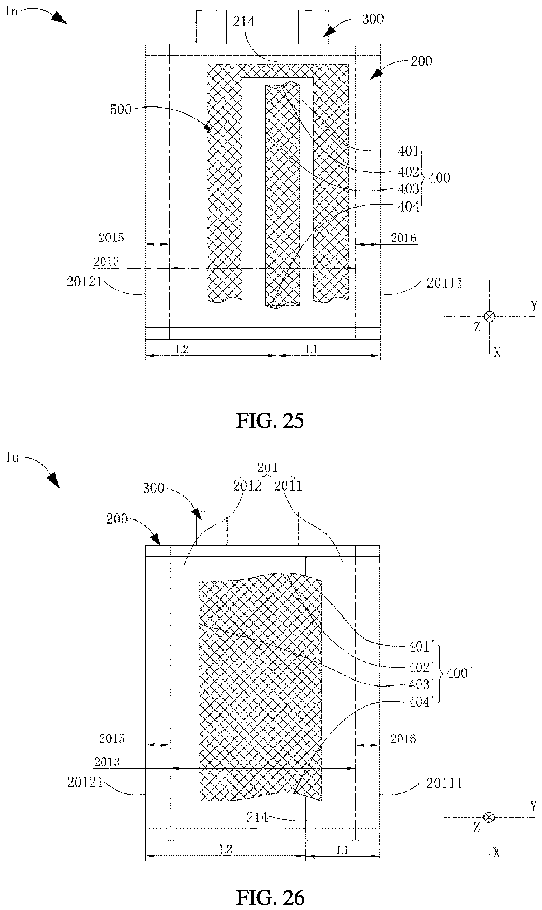

For another example, FIG. 25 is a schematic diagram of a battery 1n with a housing hidden as viewed along a first direction Z according to a twelfth embodiment of this application. The battery 1g includes a housing, an electrode assembly 200, a current collecting plate 300, a first layer 400, and a second layer 500. The main difference between the battery 1n and the battery 1 is that in the battery n, a part of the second layer 500 is fixed to the first region 2011, and another part of the second layer is fixed to the second region 2012.

In contrast to the first embodiment, under the condition that the width of the second layer 500 in the battery 1n provided in the second embodiment is substantially the same, it is still easier to prevent bubbles in the second layer in a process of fixing the second layer 500. In other words, the second layer 500 can provide a larger bonding area without being prone to residual bubbles, thereby enhancing the strength of fixing between the electrode assembly 200 and the housing.

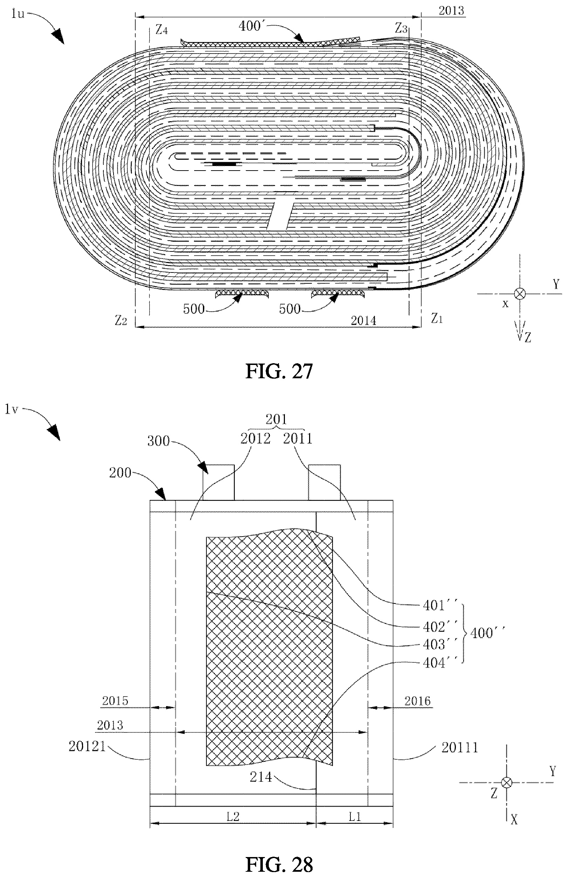

For another example, FIG. 26 is a schematic diagram of a battery 1u with a housing 100 hidden as viewed along a first direction Z according to Comparative Embodiment 1 of this application; and FIG. 27 is a bottom view of FIG. 26. With reference to FIG. 1 to FIG. 21 together, the battery 1u includes a housing, an electrode assembly 200, a current collecting plate 300, a first layer 400', and a second layer 500, and mainly differs from the battery 1 provided in the first embodiment in that: the second layer 500 in the battery 1u is disposed on the second surface 202. Specifically, the first layer 400' is disposed at a junction between the first region 2011 and the second region 2012, and is merely configured to fix the first ending end 212 instead of fixing the electrode assembly 200 and the casing. For example, in some embodiments, the first layer 400' may be single-sided tape. The second layer 500 is specifically disposed on the second face 2014, and is configured to fix the electrode assembly 200 to the housing. The material of the second layer 500 may be consistent with the material selected in other embodiments, and may be a double-sided tape, hot-melt adhesive, or any other component suitable for connecting the electrode assembly 200 to the housing. Optionally, the battery 1u includes two second layers 500. The two second layers 500 are both disposed on the second face 2014, and spaced out along the third direction Y.

The battery 1u provided in this embodiment fixes the first ending end 212 through the first layer 400', and fixes the electrode assembly 200 and the housing through the two second layers 500. In contrast to the battery 1, three adhesive layers need to be disposed in order for the battery 1u to achieve the same fixed area as the battery 1, thereby increasing the manufacturing cost accordingly, and increasing the manufacturing cycle time accordingly. In addition, in a chemical formation process, the housing and the electrode assembly are subjected to squeezing. Each additional adhesive layer applied gives rise to a tiny wavy bulge on the housing. In other words, the battery 1u forms more noticeable wavy deformation on the surface of the housing than the battery 1, thereby affecting the consistency of the battery and the anti-drop effect.

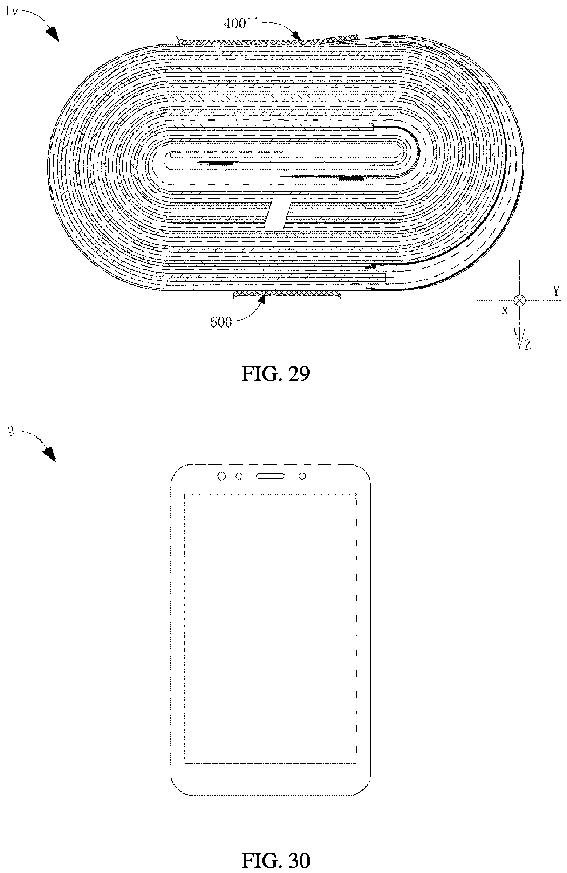

For another example, FIG. 28 is a schematic diagram of a battery 1v with a housing 100 hidden according to Comparative Embodiment 2 of this application; and FIG. 29 is a bottom view of FIG. 28. With reference to FIG. 1 to FIG. 25 together, the battery 1v includes a housing, an electrode assembly 200, a current collecting plate 300, a first layer 400", and a second layer 500, and mainly differs from the battery 1u provided in Comparative Embodiment 1 in that: each second layer 500 in the battery 1v is disposed in an integrated manner. As mentioned earlier above, although the integrated arrangement of each second layer 500 can simplify the fixing process of the second layer 500 and shorten a manufacturing cycle time of the battery 1v, the integration gives rise to more residual bubbles, and reduces the strength of fixing between the second layer 500 and the electrode assembly 200.

Next, the following describes the difference in the anti-drop performance and anti-deformation performance between the batteries provided in different embodiments with reference to test data.

Specifically, Table 1 shows comparison between the batteries provided in different embodiments in an anti-drop performance test. For ease of description, the first embodiment to the twelfth embodiment are referred to as Embodiments 1 to 12 respectively, the first comparative embodiment to the second comparative embodiment are referred to as Comparative Embodiment 1 and Comparative Embodiment 2 respectively. This test aims to simulate battery failure caused by the drop of the battery during daily use, so as to determine the anti-drop performance of the battery. A specific test method is as follows:

S101: Charging a battery at a current of 0.2 C at a normal temperature until the voltage reaches a charge voltage limit. The "charge voltage limit" is set by the battery manufacturer, and is a maximum voltage value measured when the battery transitions into constant-voltage charging from constant-current charging, and may vary with the battery specifications and the manufacturer.

S102: Performing a drop test with a special-purpose battery drop test instrument. A specific test process is: first, controlling a mechanical arm of the test instrument to grab a battery sample and lift the sample to a height that is 1.8 meters (m) from a marble slab, and controlling the first face 2013 of an electrode assembly 200 in the battery to face downward, and then releasing the battery; subsequently, controlling the mechanical arm to grab the battery sample and lift the sample to a height that is 1.8 m from the marble slab, and controlling the second face 2014 of the electrode assembly 200 to face downward, and then releasing the battery; subsequently, controlling the mechanical arm to grab the battery sample and lift the sample to a height that is 1.8 m from the marble slab, and controlling the battery top to face downward, and releasing the battery; subsequently, controlling the mechanical arm to grab the battery sample and lift the sample to a height that is 1.8 m from the marble slab, and controlling the battery bottom to face downward, and then releasing the battery; subsequently, controlling the mechanical arm to grab the battery sample and lift the sample to a height that is 1.8 m from the marble slab, and controlling the third face 2015 of the electrode assembly 200 to face downward, and then releasing the battery; and finally, controlling the mechanical arm to grab the battery sample and lift the sample to a height that is 1.8 m from the marble slab, and controlling the fourth face 2016 of the electrode assembly 200 to face downward, and then releasing the battery.

S103: Determining whether the battery fails. Specifically, observing whether the surface of the battery is damaged, and measuring the open circuit voltage of the battery; determining, if the surface of the battery is damaged and/or the open circuit voltage of the battery is less than 3.0 volts (V), that the battery fails; or, determining, if the contrary is true, that the battery is normal.

S104: Repeating steps S102 to S103 if the battery is normal.

S105: Stopping the experiment if the battery fails, counting the number of times the battery sample undergoes step S2, and disassembling the battery sample to observe whether abnormality occurs at the first layer 400 and/or the second layer 500 in the electrode assembly 200.

In each embodiment, five battery samples are tested to avoid that the test result of a single battery is exceptional.

As shown in Table 1, although the second layer 500 in the battery provided in Comparative Embodiment 1 and Comparative Embodiment 2 can play the role of fixing the electrode assembly 200 and the housing, the active material is still applied on a side of the first electrode plate 500 in a region overlaid with the second layer 500, the side being oriented toward the winding center of the electrode assembly 200. The current collector of the electrode plate is torn during the drop of the battery, thereby causing the active material to fall off, and in turn, giving rise to a decline in the battery performance.

In the battery 1 provided in Embodiment 1, the first layer 400 and the second layer 500 are disposed on the first surface 201, and the first layer is separated from the second layer. Therefore, the first layer 400 and the second layer 500 can prevent bubbles more easily when being fixed to the electrode assembly 200. In other words, fewer residual bubbles are left in a region covered by the two layers. Both the first layer 400 and the second layer 500 are in close contact with the electrode assembly 200, thereby ensuring a good effect of fixing between the electrode assembly 200 and the housing. Therefore, the anti-drop effect of the battery 1 provided in Embodiment 1 is superior to Comparative Embodiment 1 and Comparative Embodiment 2.

Compared with the battery 1, the battery 1b provided in Embodiment 2 further includes a third layer 600. The third layer 600 can improve the flatness of the electrode assembly 200 to some extent, and restrain the electrode assembly 200 from loosening, thereby reducing the hazard of piercing the housing caused by the slight loosening of the electrode assembly 200.

Compared with the battery 1b, the battery 1c provided in Embodiment 3 can strengthen the effect of fixing the third layer 600 because at least one of the first layer 400 or the second layer 500 in the battery 1c is adhesively fixed to the third layer 600.

Compared with the battery 1b, the battery 1d provided in Embodiment 4 can strengthen the effect of fixing the third layer 600 because at least one of the first layer 400 or the second layer 500 in the battery 1d is adhesively fixed to the third layer 600. In addition, the first layer 400 is greater than the second layer 500 in length, thereby further improving the stability of the electrode assembly 200 itself and improving the anti-drop effect of the battery.

Compared with the battery 1, the battery 1e provided in Embodiment 5 further includes a third layer 600. In addition, the battery 1e can strengthen the effect of fixing the electrode assembly 200 because at least one of the first layer 400 or the second layer 500 is adhesively fixed to the third layer 600.

Compared with the battery 1, the battery 1f provided in Embodiment 6 makes the first ending end 212 relatively long on the one hand, so as to make it convenient to dispose the second layer 500 in the first region 2011, and in turn, reduce the risk of detachment of the active material. On the other hand, the battery 1e further includes a third layer 600, and can strengthen the effect of fixing the electrode assembly 200 because at least one of the first layer 400 or the second layer 500 is adhesively fixed to the third layer 600. Therefore, the battery 1f achieves superior anti-drop performance.

In the battery 1g provided in Embodiment 7, the first layer 400 and the second layer 500 are disposed on the first surface 201 and are integrated together. This arrangement is equivalent to increasing the area of the first layer 400 and omitting the second layer 500 on the second surface 202. The contact between the electrode assembly 200 and the housing is closer. Therefore, the anti-drop effect of the battery 1g provided in Embodiment 7 is superior to Comparative Embodiment 1 and Comparative Embodiment 2.

To sum up, it is ensured that the battery exhibits superior anti-drop performance when both the first layer 400 and the second layer 500 are disposed on the first face 2013, and the third layer 600 can further improve the anti-drop performance of the battery.

**Table 1 Results of anti-drop performance tests of batteries provided in different embodiments**

| | Serial number of battery in drop test | | | | | Average number of drops | Test results |
|---|---|---|---|---|---|---|---|
| | 1 | 2 | 3 | 4 | 5 | | |
| Comparative Embodiment 1 | 31 | 30 | 31 | 31 | 32 | 31.0 | The current collector is torn and the active material falls off |
| Comparative Embodiment 2 | 30 | 30 | 29 | 30 | 32 | 30.2 | The current collector is torn and the active material falls off |
| Embodiment 1 | 45 | 42 | 40 | 42 | 42 | 42.2 | The housing is impacted for a relatively large number of times |
| Embodiment 2 | 56 | 57 | 59 | 57 | 57 | 57.2 | The housing is impacted for a relatively large number of times |
| Embodiment 3 | 62 | 64 | 61 | 62 | 61 | 62.0 | The housing is impacted for a relatively large number of times |
| Embodiment 4 | 62 | 61 | 63 | 61 | 62 | 61.8 | The housing is impacted for a relatively large number of times |
| Embodiment 5 | 55 | 60 | 49 | 57 | 53 | 54.8 | The housing is impacted for a relatively large number of times |
| Embodiment 6 | 70 | 75 | 73 | 76 | 71 | 73.0 | The housing is impacted for a relatively large number of times |
| Embodiment 7 | 42 | 40 | 37 | 45 | 40 | 40.8 | The large adhesive area leads to loose contact between the adhesive and the electrode assembly (with bubbles), and the battery wobbles in the packaging bag |

Still referring to Table 2, which shows the test results of the deformation degree of the batteries compared between different embodiments, this test aims to simulate the deformation degree of a battery cycled repeatedly during daily use, so as to determine the deformation resistance performance of the battery. Specific steps of the deformation test are as follows:
S201: Charging a battery at a current of 0.2 C at a normal temperature until a fully charged state.
S202: Discharging the battery until the voltage reaches a cut-off voltage, and then charging the battery at a constant current of 0.8 C until the voltage reaches a charge voltage limit, and then charging the battery at a constant voltage.
S203: Measuring and recording a first thickness t1 of the battery at the position of the current collecting plate, and then applying a preset pressure to the battery by use of a PPG pouch battery thickness gauge. Measuring and recording a second thickness t2 of the battery under the preset pressure. Calculating a first thickness difference Δt as Δt = t2 - t1, where Δt is a quantitative indicator of the deformation degree of the battery.
S204: Repeating step S202 for 700 times.
S205: Measuring and recording a third thickness T1 of the battery at the position of the current collecting plate, and then applying a preset pressure to the battery by use of a PPG pouch battery thickness gauge. Measuring and recording a fourth thickness T2 of the battery under the preset pressure. Calculating a second thickness difference Δt as ΔT = T2 - T1, where Δt is a quantitative indicator of the deformation degree of the battery.

As shown in Table 2, although the second layer 500 in the batteries provided in Comparative Embodiment 1 and Comparative Embodiment 2 can play a role of fixing the electrode assembly 200 and the housing, the first layer 400 and the second layer 500 are distributed on two sides of Δt of the electrode assembly respectively along the first direction of the battery, and therefore, wavy bulges occur on both of the two surfaces of the battery that are disposed opposite to each other along the first direction, thereby increasing the first thickness difference Δt and the second thickness difference ΔT of the battery compared between before and after charging and discharging. In other words, the deformation degree of the batteries provided in Comparative Embodiment 1 and Comparative Embodiment 2 is relatively noticeable.

In the battery 1 provided in Embodiment 1, the first layer 400 and the second layer 500 are disposed on the same surface of the electrode assembly 200, and are arranged separately. On the one hand, this arrangement reduces or even eliminates the wavy bulges on a surface of the battery, the surface being away from the first layer 400 along the first direction Z. On the other hand, there are fewer bubbles between the first layer 400 and the electrode assembly 200, and fewer bubbles between the second layer 500 and the electrode assembly. Therefore, the connection strength between the electrode assembly 200 and the housing is higher than that of Embodiment 7, thereby reducing the degree of deformation of the battery 1. Moreover, as can be seen from the data in Table 2, the deformation resistance performance of the battery 1 is significantly improved against the battery 1u and the battery 1v.

The batteries provided in Embodiments 2 to 6 are batteries with improvements made by adding a third layer 600 on the basis of the battery 1, and exhibit higher deformation resistance performance than the battery 1 provided in the Embodiment 1. Specifically, the third layer 600 can restrain the electrode assembly 200 from loosening and ensure high flatness of each part of the electrode assembly 200, thereby reducing the degree of battery deformation caused by local deformation of the electrode assembly 200 during charging.

In the battery 1g provided in Embodiment 7, no second layer 500 is disposed on the second face 2014. Therefore, the wavy bulges mainly occur in a region close to the first face 2013 of the battery, and the wavy bulges in a region close to the second face 2014 decrease or even disappear correspondingly. Therefore, the first thickness difference Δt and the second thickness difference ΔT of the battery 1g provided in Embodiment 7 compared before and after the charging and discharging are both less than those of the batteries provided in Comparative Embodiment 1 and Comparative Embodiment 2. In other words, the battery 1g provided in Embodiment 7 exhibits higher deformation resistance performance than Comparative Embodiment 1 and Comparative Embodiment 2.

To sum up, with the first layer 400 and the second layer 500 disposed on the same side of the electrode assembly 200 in the first direction, that is, on the first face 2013, it is ensured that the battery achieves superior deformation resistance performance without decreasing the energy density. The third layer 600 can further improve the deformation resistance performance of the battery.

**Table 2 Test results of deformation degree of batteries compared between different embodiments**

| | Initial thickness of battery | | | Thickness of battery cycled for 700 cycles | | |
|---|---|---|---|---|---|---|
| | Thickness t1 of battery at current collecting plate (µm) | Thickness t2 of battery at remaining part (µm) | t2-t1 (µm) | Thickness T1 of battery at current collecting plate (µm) | Thickness T2 of battery at remaining part (µm) | T2-T1 (µm) |
| Comparative Embodiment 1 | 4300 | 4650 | 350 | 4683 | 5182 | 499 |
| Comparative Embodiment 2 | 4300 | 4600 | 300 | 4667 | 5129 | 462 |
| Embodiment 1 | 4300 | 4330 | 30 | 4662 | 4765 | 103 |
| Embodiment 2 | 4300 | 4327 | 27 | 4647 | 4675 | 28 |
| Embodiment 3 | 4300 | 4323 | 23 | 4666 | 4693 | 27 |
| Embodiment 4 | 4300 | 4321 | 21 | 4654 | 4692 | 38 |
| Embodiment 5 | 4300 | 4324 | 24 | 4658 | 4689 | 31 |
| Embodiment 6 | 4310 | 4322 | 12 | 4660 | 4685 | 25 |
| Embodiment 7 | 4300 | 4346 | 46 | 4660 | 4799 | 139 |

Based on the same inventive concept, this application further provides an electronic device. Specifically, referring to FIG. 30, which is a schematic diagram of an electronic device 2 according to an embodiment of this application, with reference to FIG. 1 to FIG. 25 together, the electronic device 2 includes the battery according to any one of the foregoing embodiments of this application. In this embodiment, the electronic device 2 is a mobile phone. Understandably, in some other embodiments of this application, the electronic device 2 may be a tablet computer, a computer, an unmanned aerial vehicle, or any other electronic devices that need to be electrically powered.

Due to the battery contained, the electronic device 2 can reduce the risk of slip of the electrode assembly relative to the housing in a case of dropping.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A battery comprising a housing, an electrode assembly, a first layer, and a second layer; **characterized in that**
the electrode assembly is accommodated in the housing, the electrode assembly comprises a first electrode plate, a second electrode plate and a separator located between the first electrode plate and the second electrode plate; the first electrode plate and the second electrode plate are stacked together, the electrode assembly is wound, and the first electrode plate comprises a first edge and a second edge disposed opposite to each other along a winding direction and comprises a first ending end away from the first edge;
viewed along a first direction, the electrode assembly comprises a first surface, the first ending end is located on the first surface, the first ending end is a part of the first electrode plate formed by extending the first electrode plate for a preset distance from the second edge along the winding direction of the electrode assembly, the second edge is located on the first surface and divides the first surface into a first region and a second region, the first region is a region containing the first ending end, and the first direction is perpendicular to a surface of the first layer;
the first layer is fixed to the first region and the second region; and
the second layer is fixed to the first surface and at a distance from the first layer, and the second layer is configured to fix the electrode assembly to the housing.

2. The battery according to claim 1, wherein the second layer is fixed within the second region.

3. The battery according to claim 2, wherein viewed along the first direction, the first region comprises a first edge line opposite to the second edge, and the first edge line is at a first distance from the second edge;
the second region comprises a second edge line opposite to the second edge, and the second edge line is at a second distance from the second edge; and
the first distance is less than the second distance.

4. The battery according to claim 1, wherein the second layer is fixed within the first region.

5. The battery according to claim 4, wherein viewed along the first direction, the first region comprises a first edge line opposite to the second edge, and the first edge line is at a first distance from the second edge;
the second region comprises a second edge line opposite to the second edge, and the second edge line is at a second distance from the second edge; and
the first distance is greater than the second distance.

6. The battery according to claim 1, wherein the second layer is fixed within the first region and the second region.

7. The battery according to claim 1, wherein along a second direction, a length of the first layer is greater than a length of the second layer; and
the second direction is a direction in which the second edge extends.

8. The battery according to claim 1, wherein along a second direction, at least one end of the first layer is located beyond two ends of the second layer; and
the second direction is a direction in which the second edge extends.

9. The battery according to claim 7 or 8, wherein along a third direction, a width of the first layer is greater than a width of the second layer; and
the third direction is perpendicular to both the first direction and the second direction.

10. The battery according to claim 1, wherein the first layer is rectangular, a long edge of the first layer is at an angle θ to the second edge, and 0° < θ < 15°.

11. The battery according to claim 1, wherein an outer side surface of the electrode assembly comprises a first face and a second face disposed opposite to each other along the first direction, and comprises a third face and a fourth face disposed opposite to each other along a third direction;
viewed along a second direction, both the first face and the second face extend along the third direction and are located between a first reference line and a second reference line; the third face extends in a curved manner and is located on a side of the second reference line, the side being away from the first reference line; the fourth face extends in a curved manner and is located on a side of the first reference line, the side being away from the second reference line; and the first face, the third face, the second face, and the fourth face are connected in sequence;
viewed along the first direction, the first surface comprises at least a part of the first face, a part of the third face, and a part of the fourth face, and the second edge is located on the first face; and
the first layer and/or the second layer are disposed on the first face, wherein
the second direction is a direction in which the second edge extends; the third direction is perpendicular to both the first direction and the second direction; and, viewed along the second direction and counted by starting from the first edge, an outermost point along the third direction at a first corner in the first electrode plate is a first point, the first reference line is parallel to the first direction and passes through the first point, and, by starting from the first edge, an outermost point along the third direction at a second corner in the first electrode plate is a second point, and the second reference line is parallel to the first direction and passes through the second point.

12. The battery according to claim 11, further comprising a third layer; and
a first end of the third layer is fixed to the first face, and a second end of the third layer is fixed to the second face.

13. The battery according to claim 12, wherein the first end of at least one third layer is fixed to the first layer; and/or
the first end of at least one third layer is fixed to the second layer; and/or
the first end of at least one third layer is fixed to both the first layer and the second layer.

14. The battery according to any one of claims 1 to 8, wherein the first electrode plate is wound to form a plurality of first portions and a plurality of second portions;
the second electrode plate comprises a third edge and a fourth edge disposed opposite to each other along the winding direction; the second electrode plate is wound around the third edge; the second electrode plate comprises a second ending end facing away from the third edge; the second ending end is a part of the second electrode plate, and the part is formed by extending the second electrode plate for a preset distance from the fourth edge along the winding direction; the second ending end is disposed between two adjacent first portions or between two adjacent second portions; and, along the winding direction, the first electrode plate exceeds the second ending end; and
no active material layer is applied on a side of a part of the first electrode plate, the side being facing away from the first edge; the part is located from a start point to the second edge, the start point is a point at which a first portion or a second portion just exceeds the second ending end, and the first portion or second portion is adjacent to the second ending end and located on a side of the second ending end, the side being close to the first edge.

15. The battery according to any one of claims 1 to 8, wherein the first layer and/or the second layer comprises an adhesive; and
the adhesive comprises a double-sided tape, and the double-sided tape comprises a substrate layer and a binder layer applied on two sides of the substrate layer, or, the adhesive comprises a hot-melt adhesive.

16. An electronic device comprising the battery according to any one of claims 1 to 15.
